# EUROPEAN PATENT APPLICATION

(11) **EP 4 838 549 A1**
(43) Date of publication of application: **11.11.2026**
(21) Application number: 24953724.2
(22) Date of filing: 09.09.2024
(51) Int. Cl.: H01G 4/30

(54) **MULTILAYER CERAMIC CAPACITOR**

(71) Applicant: Murata Manufacturing Co., Ltd., Nagaokakyo-shi, Kyoto 617-8555 (JP)
(72) Inventor: TOMINAGA, Ken, Nagaokakyo-shi, Kyoto 617-8555 (JP); KURITANI, Jun, Nagaokakyo-shi, Kyoto 617-8555 (JP); WATANABE, Yukie, Nagaokakyo-shi, Kyoto 617-8555 (JP)
(74) Representative: Stöckeler, Ferdinand
(86) International application number: PCT/JP2024/032189
(87) International publication number: WO 2026/053404

(57) **Abstract**

Provided is a multilayer ceramic capacitor capable of suppressing occurrence of cracks at the time of mounting by a mounter or the like. A multilayer ceramic capacitor 10 according to the present invention includes a multilayer body having a first surface and a second surface opposed in a lamination direction, a third surface and a fourth surface opposed in a first direction orthogonal to the lamination direction, and a fifth surface and a sixth surface opposed in a second direction orthogonal to the lamination direction and the first direction; and first to fourth outer electrodes disposed on a surface of the multilayer body. The multilayer body includes a first inner electrode exposed to the third surface and the fourth surface, and a second inner electrode exposed to the third surface and the fourth surface. The first outer electrode has a first base plating layer connected to the first inner electrode. When a dimension in the lamination direction of the first base plating layer is denoted by t, a dimension in the lamination direction of the multilayer body is denoted by T, a dimension in the first direction of the multilayer ceramic capacitor is denoted by L, and a dimension in the second direction of the multilayer ceramic capacitor is denoted by W, 0.85 ≤ L/W ≤ 1.0 is satisfied, and (T - 5 µm) ≤ t ≤ (T + 2 µm) is satisfied.

## Description

### Technical Field

The present invention relates to a multilayer ceramic capacitor.

### Background Art

In recent years, miniaturization and thickness reduction of electronic devices such as cellular phones and portable music players have been progressing. Along with that, miniaturization and thickness reduction are also progressing in multilayer ceramic capacitors mounted in electronic devices that have been miniaturized and reduced in thickness (refer to Patent Document 1). Particularly in multilayer ceramic capacitors where thickness reduction is progressing, for example, even when they are used by being built into a wiring board or mounted on a surface of a wiring board, they have come to be mounted in very narrow gaps.

### Citation List

### Patent Document

Patent Document 1: Japanese Unexamined Patent Application Publication No. 2021-101449

### Summary of Invention

### Technical Problem

As a multilayer ceramic capacitor responding to such layer thinning, a multilayer ceramic capacitor described in Patent Document 1 is disclosed. In the multilayer ceramic capacitor described in Patent Document 1 and the like, a method is known in which a region other than outer electrodes is masked, and a base layer is formed as a sputtered film using a sputtering method. However, there have been cases where a multilayer ceramic capacitor is cracked at the time of mounting, or a mounting height thereof becomes large due to excessive solder wetting up.

Therefore, a main object of the present invention is to provide a multilayer ceramic capacitor capable of suppressing occurrence of cracks at the time of mounting by a mounter or the like.

### Solution to Problem

A multilayer ceramic capacitor according to the present invention includes a multilayer body having a first surface and a second surface opposed in a lamination direction, a third surface and a fourth surface opposed in a first direction orthogonal to the lamination direction, and a fifth surface and a sixth surface opposed in a second direction orthogonal to the lamination direction and the first direction; and first to fourth outer electrodes disposed on a surface of the multilayer body. The multilayer body includes a first inner electrode exposed to the third surface and the fourth surface, and a second inner electrode exposed to the third surface and the fourth surface. The first outer electrode has a first base plating layer connected to the first inner electrode. When a dimension in the lamination direction of the first base plating layer is denoted by t, a dimension in the lamination direction of the multilayer body is denoted by T, a dimension in the first direction of the multilayer ceramic capacitor is denoted by L, and a dimension in the second direction of the multilayer ceramic capacitor is denoted by W, 0.85 ≤ L/W ≤ 1.0 is satisfied, and (T - 5 µm) ≤ t ≤ (T + 2 µm) is satisfied.

According to the multilayer ceramic capacitor of the present invention, by satisfying the condition of 0.85 ≤ L/W ≤ 1.00, the multilayer body has a substantially square-prism shape, and when the dimension in the lamination direction x of the first base plating layer is denoted by t, and the dimension in the lamination direction x of the multilayer body 12 is denoted by T, since the condition of T - 5 µm ≤ t ≤ T + 2 µm is satisfied, it is possible to ensure that a region where the outer electrode partially protrudes in the lamination direction is small; therefore, it is possible to reduce a probability of occurrence of cracks to the multilayer ceramic capacitor at the time of mounting. Advantageous Effects of Invention

According to the present invention, a multilayer ceramic capacitor capable of suppressing occurrence of cracks at the time of mounting by a mounter or the like is provided.

The above-described object, other objects, features, and advantages of the present invention will become more apparent from the following description of embodiments of the invention given with reference to the drawings.

### Brief Description of Drawings

[Fig. 1] Fig. 1 is an external perspective view showing an example of a multilayer ceramic capacitor according to a first embodiment of the present invention.
[Fig. 2] Fig. 2 is a front view showing an example of the multilayer ceramic capacitor according to the first embodiment of the present invention.
[Fig. 3] Fig. 3 is a side view showing an example of the multilayer ceramic capacitor according to the first embodiment of the present invention.
[Fig. 4] Fig. 4 is a schematic cross-sectional view along line IV-IV according to Fig. 1.
[Fig. 5] Fig. 5 is a schematic cross-sectional view along line V-V according to Fig. 1.
[Fig. 6] Fig. 6 is a schematic cross-sectional view along line VI-VI according to Fig. 1.
[Fig. 7] Fig. 7 is a schematic cross-sectional view along line VII-VII according to Fig. 1.
[Fig. 8A] Fig. 8A(a) is an external perspective view showing a state where a base plating layer is disposed on a multilayer body, and Fig. 8A(b) is a cross-sectional view along line VIIIa-VIIIa according to Fig. 8A(a).
[Fig. 8B] Fig. 8B is an enlarged view of portion A of Fig. 8A(b), and is an explanatory view schematically showing a structure of the base plating layer.
[Fig. 8C] Fig. 8C is an explanatory view schematically showing a modification of the base plating layer, a thin film layer, and a structure.
[Fig. 9A] Fig. 9A is a schematic cross-sectional view along line IXA-IXA according to Fig. 2.
[Fig. 9B] Fig. 9B is a schematic cross-sectional view along line IXB-IXB according to Fig. 2.
[Fig. 10] Fig. 10 is an exploded perspective view of the multilayer body shown in Fig. 1.
[Fig. 11A] Fig. 11A is an external perspective view from one side showing an example of a multilayer ceramic capacitor according to a second embodiment of the present invention.
[Fig. 11B] Fig. 11B is an external perspective view from the other side showing an example of the multilayer ceramic capacitor according to the second embodiment of the present invention.
[Fig. 12] Fig. 12 is a front view showing an example of the multilayer ceramic capacitor according to the second embodiment of the present invention.
[Fig. 13] Fig. 13 is a schematic cross-sectional view along line XIII-XIII according to Fig. 131.
[Fig. 14] Fig. 14 is a schematic cross-sectional view along line XIV-XIV according to Fig. 131.
[Fig. 15] Fig. 15 is a schematic cross-sectional view along line XV-XV according to Fig. 131.
[Fig. 16] Fig. 16 is a schematic cross-sectional view along line XVI-XVI according to Fig. 131.
[Fig. 17A] Fig. 17A is a schematic cross-sectional view along line XVIIA-XVIIA according to Fig. 12.
[Fig. 17B] Fig. 17B is a schematic cross-sectional view along line XVIIB-XVIIB according to Fig. 12.
[Fig. 18] Fig. 18 is an exploded perspective view of the multilayer body shown in Fig. 11A.
[Fig. 19] Fig. 19 is an external perspective view showing an example of a multilayer ceramic capacitor according to a third embodiment of the present invention.
[Fig. 20] Fig. 20 is a front view showing an example of the multilayer ceramic capacitor according to the third embodiment of the present invention.
[Fig. 21] Fig. 21 is a schematic cross-sectional view along line XXI-XXI according to Fig. 19.
[Fig. 22] Fig. 22 is a schematic cross-sectional view along line XXII-XXII according to Fig. 19.
[Fig. 23] Fig. 23 is a schematic cross-sectional view along line XXIII-XXIII according to Fig. 19.
[Fig. 24] Fig. 24 is a schematic cross-sectional view along line XXIV-XXIV according to Fig. 19.
[Fig. 25] Fig. 25 is an external perspective view showing an example of a multilayer ceramic capacitor according to a fourth embodiment of the present invention.
[Fig. 26] Fig. 26 is a schematic cross-sectional view along line XXVI-XXVI according to Fig. 25.
[Fig. 27] Fig. 27 is a schematic cross-sectional view along line XXVII-XXVII according to Fig. 25.
[Fig. 28] Fig. 28 is a schematic cross-sectional view along line XXVIII-XXVIII according to Fig. 19.

### Description of Embodiments

### A. First Embodiment

### 1. Multilayer Ceramic Capacitor

Next, an example of a multilayer ceramic capacitor 10 according to an embodiment of the present invention will be described.

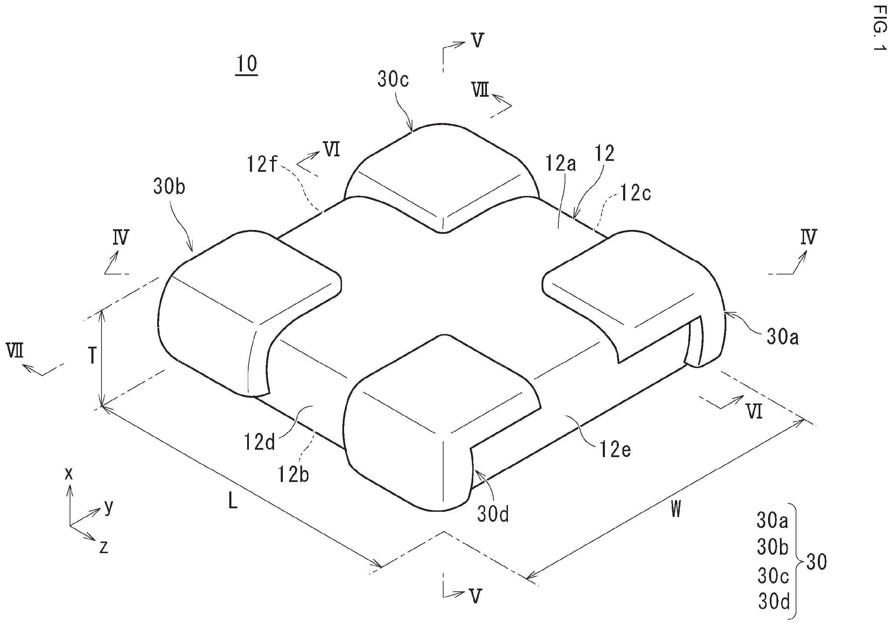

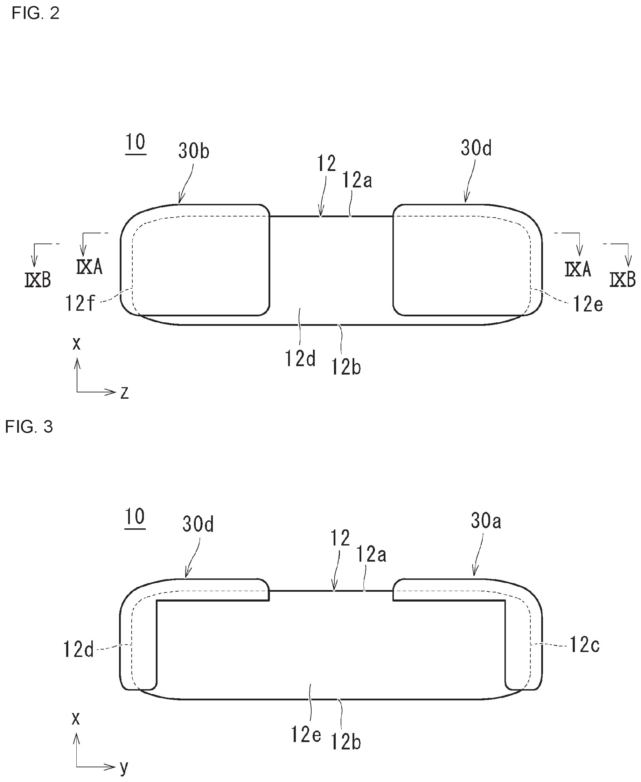

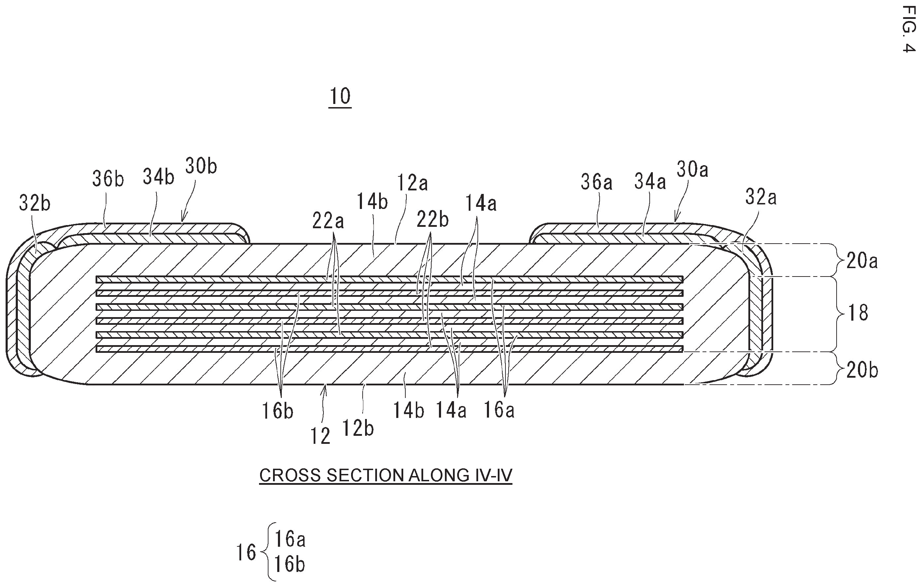

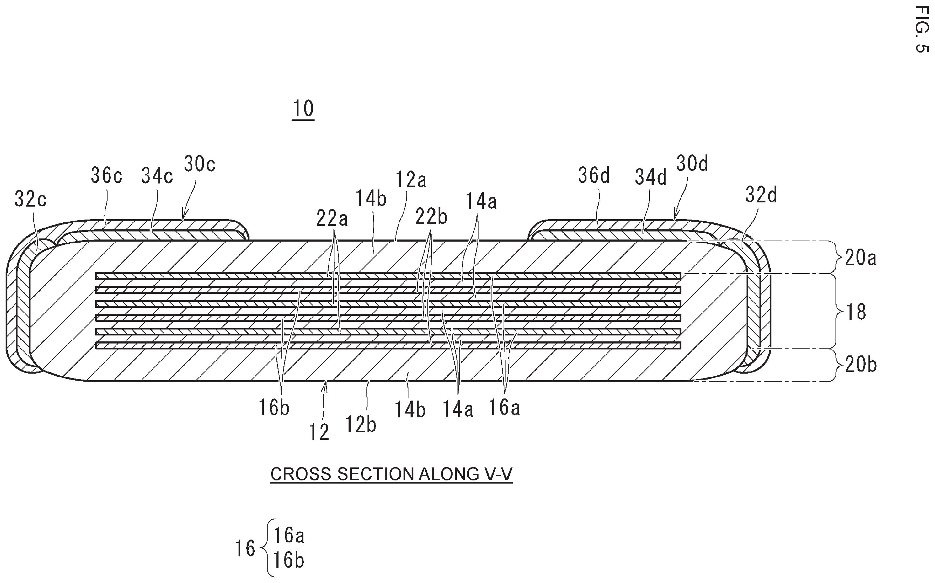

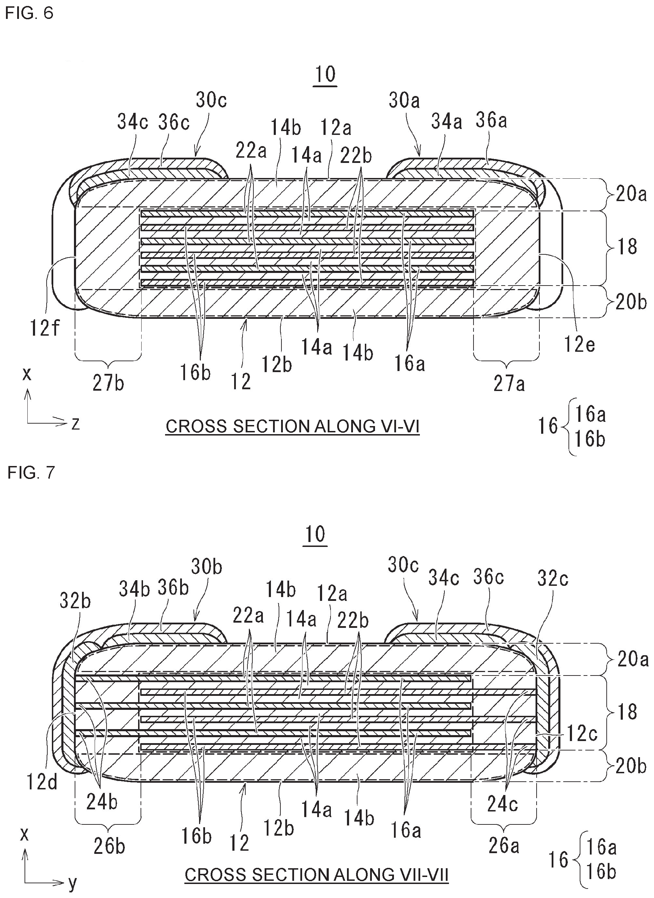

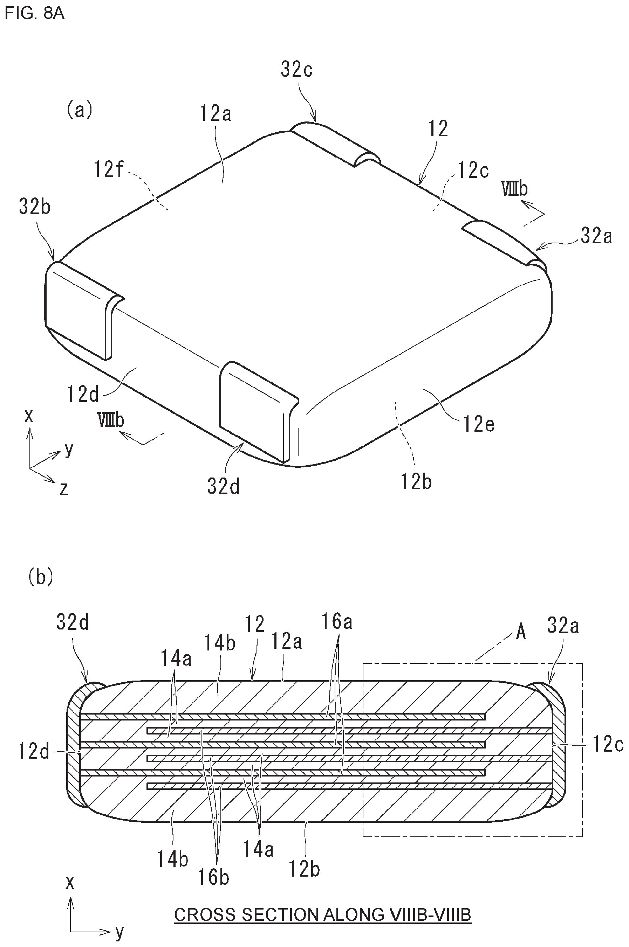

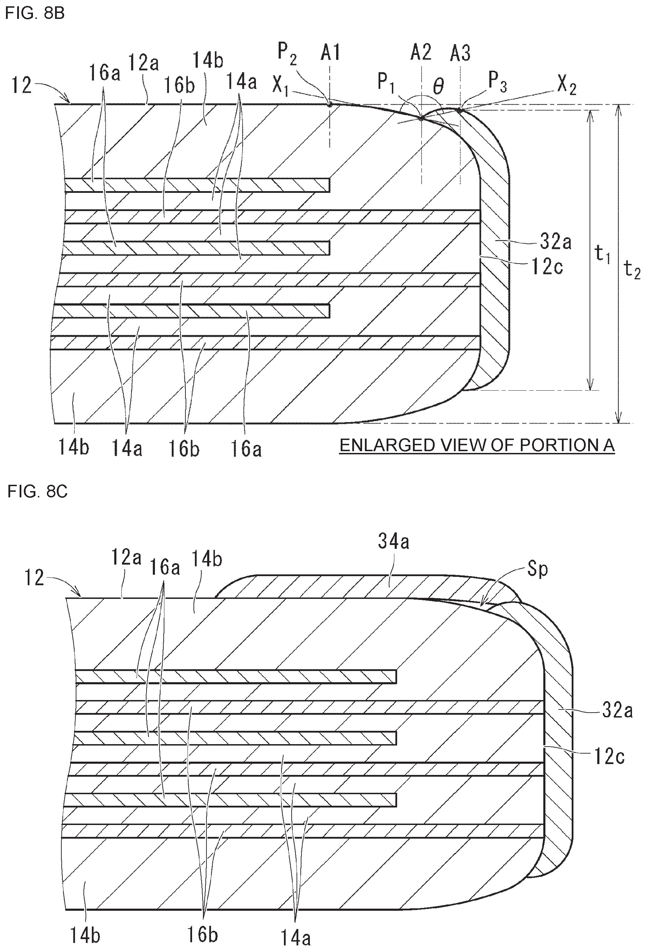

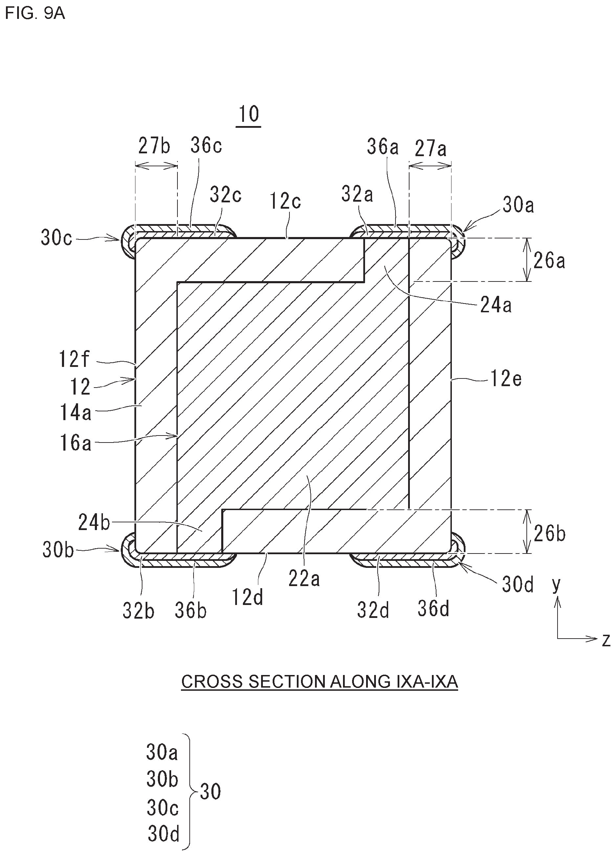

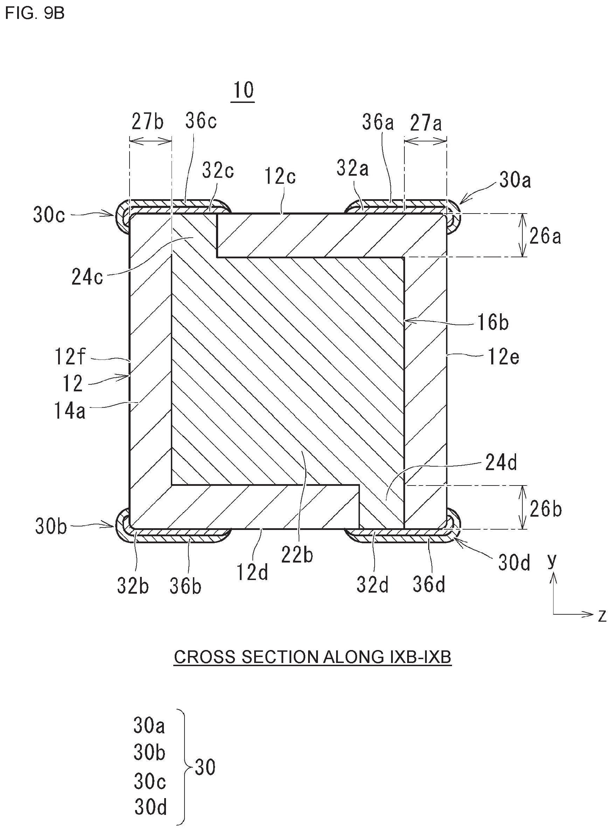

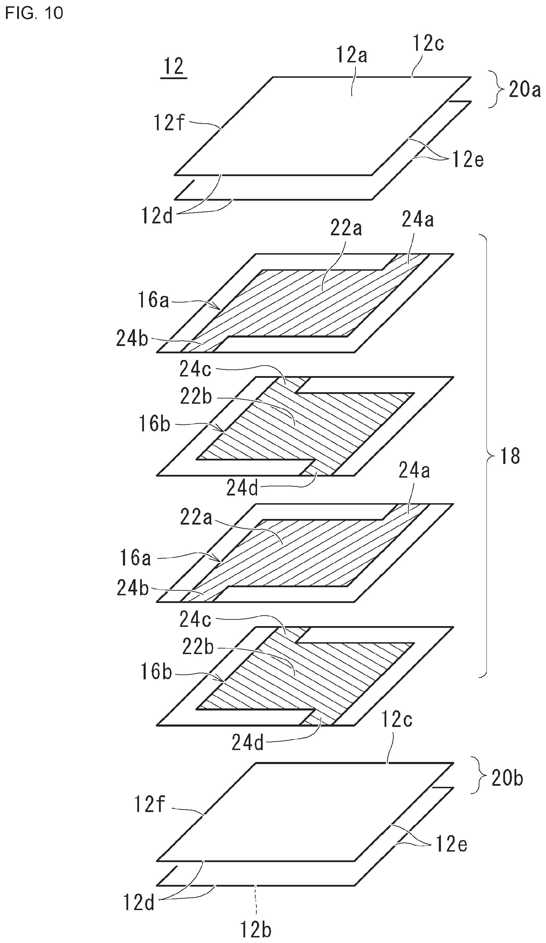

Fig. 1 is an external perspective view showing an example of a multilayer ceramic capacitor according to a first embodiment of the present invention. Fig. 2 is a front view showing an example of the multilayer ceramic capacitor according to the first embodiment of the present invention. Fig. 3 is a side view showing an example of the multilayer ceramic capacitor according to the first embodiment of the present invention. Fig. 4 is a schematic cross-sectional view along line IV-IV according to Fig. 1. Fig. 5 is a schematic cross-sectional view along line V-V according to Fig. 1. Fig. 6 is a schematic cross-sectional view along line VI-VI according to Fig. 1. Fig. 7 is a schematic cross-sectional view along line VII-VII according to Fig. 1. Fig. 8A(a) is an external perspective view showing a state where a base plating layer is disposed on a multilayer body, and Fig. 8A(b) is a cross-sectional view along line VIIIa-VIIIa according to Fig. 8A(a). Fig. 8B is an enlarged view of portion A of Fig. 8A(b), and is an explanatory view schematically showing a structure of the base plating layer. Fig. 8C is an explanatory view schematically showing a modification of the base plating layer, a thin film layer, and a structure. Fig. 9A is a schematic cross-sectional view along line IXA-IXA according to Fig. 2. Fig. 9B is a schematic cross-sectional view along line IXB-IXB according to Fig. 2. Fig. 10 is an exploded perspective view of the multilayer body shown in Fig. 1.

The multilayer ceramic capacitor 10 includes a multilayer body 12 and a plurality of outer electrodes 30.

### (Multilayer Body)

The multilayer body 12 has a first surface 12a and a second surface 12b opposed in a lamination direction x, a third surface 12c and a fourth surface 12d opposed in a first direction y orthogonal to the lamination direction x, and a fifth surface 12e and a sixth surface 12f opposed in a second direction z orthogonal to the lamination direction x and the first direction y. A direction connecting the first surface 12a and the second surface 12b of the multilayer body 12 to each other is the lamination direction x.

Moreover, it is preferable that corner portions and ridge line portions of the multilayer body 12 are rounded. Note that the corner portion is a portion where adjacent three surfaces of the multilayer body 12 intersect, and the ridge line portion is a portion where adjacent two surfaces of the multilayer body 12 intersect. Also, irregularities or the like may be formed on a part or all of the third surface 12c and the fourth surface 12d, and the fifth surface 12e and the sixth surface 12f.

Further, a surface of either one of the first surface 12a or the second surface 12b may be roughened.

The multilayer body 12 includes a plurality of dielectric layers 14 and a plurality of inner electrodes 16. The dielectric layers 14 include an inner layer dielectric layer 14a and an outer layer dielectric layer 14b. Moreover, the inner electrodes 16 include a first inner electrode 16a and a second inner electrode 16b.

Further, the multilayer body 12 has an inner layer portion 18, a first outer layer portion 20a located on the first surface 12a side, and a second outer layer portion 20b located on the second surface 12b side.

The first outer layer portion 20a is located on the first surface 12a side of the multilayer body 12, and is an aggregate of a plurality of outer layer dielectric layers 14b located between the first surface 12a and the inner electrode 16 closest to the first surface 12a.

The second outer layer portion 20b is located on the second surface 12b side of the multilayer body 12, and is an aggregate of a plurality of outer layer dielectric layers 14b located between the second surface 12b and the inner electrode 16 closest to the second surface 12b.

Then, a region sandwiched between the first outer layer portion 20a and the second outer layer portion 20b is the inner layer portion 18.

A thickness of the first outer layer portion 20a in the lamination direction x is 1.0 µm or more and 4.0 µm or less. Moreover, a thickness of the second outer layer portion 20b in the lamination direction x is 1.0 µm or more and 4.0 µm or less.

The inner layer portion 18 has the first inner electrode 16a having one end exposed to the third surface 12c and the other end exposed to the fourth surface 12d, the second inner electrode 16b having one end exposed to the third surface 12c and the other end exposed to the fourth surface 12d, and the inner layer dielectric layer 14a.

As a material of the dielectric layer 14, for example, it can be formed of a dielectric material. As the dielectric material, for example, a dielectric ceramic mainly composed of, e.g., BaTiO₃, CaTiO₃, SrTiO₃, or CaZrO₃ can be used. Moreover, those in which sub-components such as Mn compounds, Fe compounds, Cr compounds, Co compounds, and Ni compounds are added to these main components may be used. Furthermore, it is preferable that the inner layer dielectric layer 14a and the outer layer dielectric layer 14b are composed of the same dielectric material. Note that they may be composed of different dielectric materials for the purpose of dividing functions between the inner layer portion 18 and the outer layer portions 20a, 20b. In addition, at least one kind such as Si, Mg, Ba, Mn, Sn may be added as an additive.

The inner layer dielectric layer 14a, for example, when containing a large amount of CaTiO₃ or CaZrO₃ as a dielectric component, can cause dielectric breakdown less likely to occur between the first inner electrode 16a and the second inner electrode 16b. Moreover, not limited to this, the inner layer dielectric layer 14a can also have SrTiO₃ or the like as a main component. Separately, in order to increase the capacity of the multilayer ceramic capacitor 10, it is preferably formed of a material with a high dielectric constant, for example, BaTiO₃ or the like. It is preferable that a component of the outer layer dielectric layer 14b is the same type of component as a component of the inner layer dielectric layer 14a.

The dielectric layer 14 can have a plurality of crystal grains containing a perovskite-type compound having BaTiO₃ as a basic structure.

Since the capacity as a capacitor becomes larger as the thickness of the dielectric layer 14 is thinner, the crystal grain size is preferably 1 µm or less.

The number of sheets of the dielectric layers 14 to be laminated is not particularly limited, but it is preferably 3 sheets or more and 300 sheets or less including the first outer layer portion 20a and the second outer layer portion 20b. Moreover, the thickness of the dielectric layer 14 is preferably, for example, 0.4 µm or more and 2.0 µm or less.

When a direction in which the third surface 12c and the fourth surface 12d are opposed is defined as the first direction y, and a direction in which the fifth surface 12e and the sixth surface 12f are opposed is defined as the second direction z, the dimension L in the first direction y and the dimension W in the second direction z of the multilayer body 12 satisfy the condition of 0.85 ≤ L/W ≤ 1.00. That is, the multilayer body 12 has a substantially square-prism shape.

### (Inner Electrode)

The inner electrode 16 has a plurality of first inner electrodes 16a and a plurality of second inner electrodes 16b. The first inner electrodes 16a and the second inner electrodes 16b are alternately laminated via the dielectric layers 14.

The first inner electrode 16a is disposed on a surface of the inner layer dielectric layer 14a. The first inner electrode 16a has a first opposed electrode portion 22a facing the first surface 12a and the second surface 12b and facing the second inner electrode 16b, and is laminated in the direction connecting the first surface 12a and the second surface 12b.

The first inner electrode 16a is extended to the third surface 12c of the multilayer body 12 by a first extended electrode portion 24a, and is extended to the fourth surface 12d of the multilayer body 12 by a second extended electrode portion 24b. The first extended electrode portion 24a is extended to the fifth surface 12e side of the multilayer body 12, and the second extended electrode portion 24b is extended to the sixth surface 12f side of the multilayer body 12.

The second inner electrode 16b is disposed on a surface of an inner layer dielectric layer 14a different from the inner layer dielectric layer 14a on which the first inner electrode 16a is disposed. The second inner electrode 16b has a second opposed electrode portion 22b facing the first surface 12a and the second surface 12b and facing the first inner electrode 16a, and is laminated in the direction connecting the first surface 12a and the second surface 12b.

The second inner electrode 16b is extended to the third surface 12c of the multilayer body 12 by a third extended electrode portion 24c, and is extended to the fourth surface 12d of the multilayer body 12 by a fourth extended electrode portion 24d. The third extended electrode portion 24c is extended to the sixth surface 12f side of the multilayer body 12, and the fourth extended electrode portion 24d is extended to the fifth surface 12e side of the multilayer body 12.

The first inner electrode 16a and the second inner electrode 16b are not exposed to the fifth surface 12e and the sixth surface 12f of the multilayer body 12.

Moreover, when the multilayer ceramic capacitor 10 is viewed from the lamination direction x, it is preferable that a straight line connecting the first extended electrode portion 24a and the second extended electrode portion 24b of the first inner electrode 16a and a straight line connecting the third extended electrode portion 24c and the fourth extended electrode portion 24d of the second inner electrode 16b intersect.

Further, as shown in Fig. 7, the multilayer body 12 includes a side portion (W gap) 26a of the multilayer body 12 located between one end in the first direction y of the second opposed electrode portion 22b of the second inner electrode 16b and the third surface 12c, and a side portion (W gap) 26b of the multilayer body 12 located between the other end in the first direction y of the first opposed electrode portion 22a of the first inner electrode 16a and the fourth surface 12d.

Furthermore, as shown in Fig. 6, the multilayer body 12 includes an end portion (L gap) 27a of the multilayer body 12 located between one end in the second direction z of the second opposed electrode portion 22b of the second inner electrode 16b and the fifth surface 12e, and a side portion (L gap) 27b of the multilayer body 12 located between the other end in the second direction z of the first opposed electrode portion 22a of the first inner electrode 16a and the sixth surface 12f.

The first inner electrode 16a and the second inner electrode 16b can be composed of, for example, appropriate conductive materials such as metals such as Ni, Cu, Ag, Pd, and Au, and alloys containing at least one kind of those metals such as Ni-Cu alloys and Ag-Pd alloys, but are not limited thereto. Moreover, the first inner electrode 16a and the second inner electrode 16b may be composed of the same conductive material, or may be composed of different conductive materials.

Further, by including a Sn layer between each of the first and second inner electrodes 16a and 16b and the inner layer dielectric layer 14a, electric field concentration at an interface between the inner electrode 16 and the dielectric layer 14 can be relaxed, leading to improvement in high temperature loading reliability.

Also, the number of sheets of the first inner electrodes 16a and the second inner electrodes 16b is preferably 3 sheets or more and 300 sheets or less in total. Further, the thickness of the first inner electrode 16a and the second inner electrode 16b is not particularly limited, but for example, it is preferably 0.2 µm or more and 2.0 µm or less.

Note that the multilayer body 12 of the multilayer ceramic capacitor 10 may include a configuration described below.

In the multilayer ceramic capacitor 10, the third surface 12c to the sixth surface 12f of the multilayer body 12 may be curved so as to have a concave shape toward the center of the multilayer body 12 in the lamination direction x view. That is, the third surface 12c to the sixth surface 12f of the multilayer body 12 may have a warped shape. At this time, it is preferable that the center of the curvature and warpage is near the center of each of the third surface 12c to the sixth surface 12f. Thereby, since a distance between adjacent outer electrodes 30 described later can be increased, a risk of conduction between respective outer electrodes 30 can be reduced.

Moreover, it is preferable that the multilayer body 12 is rounded with a radius of curvature, R, in a region where the first surface 12a intersects with the third surface 12c to the sixth surface 12f.

### (Outer Electrode)

In the multilayer ceramic capacitor 10 according to the first embodiment, the outer electrode 30 is disposed so as to cover the first surface 12a of the multilayer body 12 and not to cover the second surface 12b.

As shown in Figs. 1 to 7, the outer electrodes 30 are disposed on the multilayer body 12.

The outer electrodes 30 have a plurality of outer electrodes 30 connected to the first inner electrode 16a and the second inner electrode 16b. The outer electrodes 30 have a first outer electrode 30a, a second outer electrode 30b, a third outer electrode 30c, and a fourth outer electrode 30d.

The first outer electrode 30a is disposed on the third surface 12c so as to cover the first extended electrode portion 24a of the first inner electrode 16a, and further, the first outer electrode 30a is disposed so as to cover a part of the first surface 12a. The first outer electrode 30a is electrically connected to the first extended electrode portion 24a of the first inner electrode 16a.

The second outer electrode 30b is disposed on the fourth surface 12d so as to cover the second extended electrode portion 24b of the first inner electrode 16a, and further, the second outer electrode 30b is disposed so as to cover a part of the first surface 12a. The second outer electrode 30b is electrically connected to the second extended electrode portion 24b of the first inner electrode 16a.

The third outer electrode 30c is disposed on the third surface 12c so as to cover the third extended electrode portion 24c of the second inner electrode 16b, and further, the third outer electrode 30c is disposed so as to cover a part of the first surface 12a. The third outer electrode 30c is electrically connected to the third extended electrode portion 24c of the second inner electrode 16b.

The fourth outer electrode 30d is disposed on the fourth surface 12d so as to cover the fourth extended electrode portion 24d of the second inner electrode 16b, and further, the fourth outer electrode 30d is disposed so as to cover a part of the first surface 12a. The fourth outer electrode 30d is electrically connected to the fourth extended electrode portion 24d of the second inner electrode 16b.

Furthermore, as shown in Fig. 1, it is preferable that the outer electrode 30 disposed on the fifth surface 12e or the sixth surface 12f where the inner electrode 16 is not extended covers either one end side of the side surface where the inner electrode 16 is not extended and a portion from an end portion of the short side to an intermediate portion of the long side.

In the multilayer body 12, the first opposed electrode portion 22a of the first inner electrode 16a and the second opposed electrode portion 22b of the second inner electrode 16b are opposed via the inner layer dielectric layer 14a, whereby electric capacity is formed. Therefore, electric capacity can be obtained between the first and second outer electrodes 30a and 30b to which the first inner electrode 16a is connected, and the third and fourth outer electrodes 30c and 30d to which the second inner electrode 16b is connected, whereby characteristics of a capacitor are exhibited.

The first outer electrode 30a, the second outer electrode 30b, the third outer electrode 30c, and the fourth outer electrode 30d each have a base plating layer 32, a thin film layer 34, and a surface plating layer 36.

In other words, the first outer electrode 30a has a first base plating layer 32a, a first thin film layer 34a, and a first surface plating layer 36a. The second outer electrode 30b has a second base plating layer 32b, a second thin film layer 34b, and a second surface plating layer 36b. The third outer electrode 30c has a third base plating layer 32c, a third thin film layer 34c, and a third surface plating layer 36c. The fourth outer electrode 30d has a fourth base plating layer 32d, a fourth thin film layer 34d, and a fourth surface plating layer 36d.

### (Base Plating Layer)

The base plating layer 32 is disposed on the third surface 12c and the fourth surface 12d. Hereinafter, a specific configuration of the base plating layer 32 will be described.

The first base plating layer 32a is disposed on a surface of the third surface 12c of the multilayer body 12 so as to cover the first extended electrode portion 24a of the first inner electrode 16a exposed from the third surface 12c of the multilayer body 12.

The second base plating layer 32b is disposed on a surface of the fourth surface 12d of the multilayer body 12 so as to cover the second extended electrode portion 24b of the first inner electrode 16a exposed from the fourth surface 12d of the multilayer body 12.

The third base plating layer 32c is disposed on a surface of the third surface 12c of the multilayer body 12 so as to cover the third extended electrode portion 24c of the second inner electrode 16b exposed from the third surface 12c of the multilayer body 12.

The fourth base plating layer 32d is disposed on a surface of the fourth surface 12d of the multilayer body 12 so as to cover the fourth extended electrode portion 24d of the second inner electrode 16b exposed from the fourth surface 12d of the multilayer body 12.

Note that the first base plating layer 32a of the first outer electrode 30a is preferably disposed on a ridge line portion formed by the first surface 12a and the third surface 12c of the multilayer body 12. An upper end of the first base plating layer 32a of the first outer electrode 30a may be disposed so as to overlap with the lower side of the first thin film layer 34a on the ridge line portion formed by the first surface 12a and the third surface 12c of the multilayer body 12, or may be disposed to be isolated.

The second base plating layer 32b of the second outer electrode 30b is preferably disposed on a ridge line portion formed by the first surface 12a and the fourth surface 12d of the multilayer body 12. An upper end of the second base plating layer 32b of the second outer electrode 30b may be disposed so as to overlap with the lower side of the second thin film layer 34b on the ridge line portion formed by the first surface 12a and the fourth surface 12d of the multilayer body 12, or may be disposed to be isolated.

The third base plating layer 32c of the third outer electrode 30c is preferably disposed on a ridge line portion formed by the first surface 12a and the third surface 12c of the multilayer body 12. An upper end of the third base plating layer 32c of the third outer electrode 30c may be disposed so as to overlap with the lower side of the third thin film layer 34c on the ridge line portion formed by the first surface 12a and the third surface 12c of the multilayer body 12, or may be disposed to be isolated.

The fourth base plating layer 32d of the fourth outer electrode 30d is preferably disposed on a ridge line portion formed by the first surface 12a and the fourth surface 12d of the multilayer body 12. An upper end of the fourth base plating layer 32d of the fourth outer electrode 30d may be disposed so as to overlap with the lower side of the fourth thin film layer 34d on the ridge line portion formed by the first surface 12a and the fourth surface 12d of the multilayer body 12, or may be disposed to be isolated.

Here, in Fig. 8B, the structure will be described in detail by taking the first base plating layer 32a of the first outer electrode 30a as an example. As shown in Fig. 8B, when a dimension in the lamination direction x of the first base plating layer 32a is denoted by t₁, and a dimension in the lamination direction x of the multilayer body 12 is denoted by t₂, the condition of t₂ - 5 µm ≤ t₁ ≤ t₂ + 2 µm is satisfied. Moreover, the first base plating layer 32a is preferably located at 5 µm or less from a point where the dimension in the lamination direction x of the multilayer body 12 is the highest. Thereby, since it is possible to ensure that a region where the outer electrode 30 partially protrudes in the lamination direction x is small, it is possible to reduce a probability of occurrence of cracks to the multilayer ceramic capacitor 10 at the time of mounting.

Preferably, the first base plating layer 32a is located inward in the lamination direction x from the point where the dimension in the lamination direction x of the multilayer body 12 is the highest. Thereby, since a portion that becomes substantially flat can be sucked and mounted by a nozzle, cracks to the multilayer ceramic capacitor caused by the outer electrode 30 can be reduced.

Moreover, as shown in Fig. 8B, when a first point P₁ where the first base plating layer 32a and the multilayer body 12 intersect is set as a reference point, an intersection of a line passing through a position 3 µm inward of the multilayer body 12 from the first point P₁ and parallel to the lamination direction x and the multilayer body 12 is set as a second point P₂, and a point where a line passing through a position 1 µm outward of the multilayer body 12 from the first point P₁ and parallel to the lamination direction x and the first base plating layer 32a intersect is set as a third point P₃, an angle θ formed by a first straight line x₁ connecting the first point P₁ and the second point P₂ and a second straight line x₂ connecting the first point P₁ and the third point P₃ is preferably 88° or more and 160° or less.

The structure of the first base plating layer 32a included in the first outer electrode 30a described above is also possessed by the second base plating layer 32b included in the second outer electrode 30b, the third base plating layer 32c included in the third outer electrode 30c, and the fourth base plating layer 32d constituting the fourth outer electrode 30d. Thereby, an amount of solder wetting up from the first surface 12a to the third surface 12c to the sixth surface 12f can be reduced, and an increase in mounting height due to excessive wetting up of solder to the second surface 12b can be avoided.

The base plating layer 32 contains, for example, Cu as a metal main component. For the base plating layer 32, for example, when the first inner electrode 16a and the second inner electrode 16b are formed using Ni, it is preferable to adopt Cu plating having good bondability with Ni.

The base plating layer 32 is formed by plating that grows from the inner electrode 16.

A thickness per one layer of the base plating layer 32 is preferably 0.5 µm or more and 10.0 µm or less.

### (Thin Film Layer)

The thin film layer 34 covers the first surface 12a. Moreover, it is preferable that the thin film layer 34 covers the base plating layer 32. Thereby, intrusion of moisture entering from the base plating layer 32 can be suppressed. The thin film layer 34 has a first thin film layer 34a, a second thin film layer 34b, a third thin film layer 34c, and a fourth thin film layer 34d.

The first thin film layer 34a covers a part of the first surface 12a of the multilayer body 12 on the third surface 12c side and the fifth surface 12e side, and is disposed so as not to cover the second surface 12b, the third surface 12c, and the fifth surface 12e of the multilayer body 12. The first thin film layer 34a may be disposed to be isolated from the first base plating layer 32a, or may be disposed to overlap the first base plating layer 32a. A surface of the first surface plating layer 36a described later may be shaped to have a recess.

The second thin film layer 34b covers a part of the first surface 12a of the multilayer body 12 on the fourth surface 12d side and the sixth surface 12f side, and is disposed so as not to cover the second surface 12b, the fourth surface 12d, and the sixth surface 12f of the multilayer body 12. The second thin film layer 34b may be disposed to be isolated from the second base plating layer 32b, or may be disposed to overlap the second base plating layer 32b. A surface of the second surface plating layer 36b described later may be shaped to have a recess.

The third thin film layer 34c covers a part of the first surface 12a of the multilayer body 12 on the third surface 12c side and the sixth surface 12f side, and is disposed so as not to cover the second surface 12b, the third surface 12c, and the sixth surface 12f of the multilayer body 12. The third thin film layer 34c may be disposed to be isolated from the third base plating layer 32c, or may be disposed to overlap the third base plating layer 32c. A surface of the third surface plating layer 36c described later may be shaped to have a recess.

The fourth thin film layer 34d covers a part of the first surface 12a of the multilayer body 12 on the fourth surface 12d side and the fifth surface 12e side, and is disposed so as not to cover the second surface 12b, the fourth surface 12d, and the fifth surface 12e of the multilayer body 12. The fourth thin film layer 34d may be disposed to be isolated from the fourth base plating layer 32d, or may be disposed to overlap the fourth base plating layer 32d. A surface of the fourth surface plating layer 36d described later may be shaped to have a recess.

Note that as shown in Fig. 8C, the first thin film layer 34a may cover the first base plating layer 32a without completely covering an end portion of the first base plating layer 32a. That is, it is preferable to have a region Sp surrounded by the multilayer body 12, the base plating layer 32, and the thin film layer. Thereby, this region Sp can mitigate an impact at the time of mounting or the like. Moreover, the structure related to the first thin film layer 34a described above can also be applied to the second thin film layer 34b to the fourth thin film layer 34d.

Each of the first thin film layer 34a to the fourth thin film layer 34d is preferably one in which metal particles are deposited, formed by a sputtering method, an evaporation method, or the like. Thereby, a thickness of the first thin film layer 34a to the fourth thin film layer 34d in the direction connecting the first surface 12a and the second surface 12b of the multilayer body 12 can be 1 µm or less, and since the dimension of the multilayer ceramic capacitor 10 in the lamination direction x can be made sufficiently small, the height of the multilayer ceramic capacitor 10 can be reduced.

Note that a measuring method of the dimensions in the lamination direction x of the first thin film layer 34a to the fourth thin film layer 34d can be as follows. That is, in the case of forming a thin film layer by deposition of metal particles, a method of performing thickness conversion from a concentration of a predetermined element by a calibration curve method of a corresponding metal species using an X-ray fluorescence apparatus can be used. In other cases, a method of observing a component cross section by FIB using a scanning electron microscope and measuring the thickness from an actual observation image can be used.

Moreover, when the first thin film layer 34a to the fourth thin film layer 34d are formed by a thin film forming method, these thin film layers are preferably made of a metal such as Cu or Ni.

Note that the first thin film layer 34a to the fourth thin film layer 34d can be configured in consideration of their respective functions. For example, considering adhesion with the multilayer body 12, it is preferable to have NiCr or NiCu as a main component. Moreover, the first thin film layer 34a to the fourth thin film layer 34d may be a plurality of sheets, or may be a two-layer structure of NiCr and NiCu.

The thin film layer 34 may be one formed by screen printing or the like and containing a dielectric material and a metal component. According to this, since the thin film layer 34 and the ceramic of the multilayer body 12 are fixed, a fixing force between the multilayer body 12 and the outer electrode 30 can be further improved. At this time, in addition to the metal component, a ceramic component having the same main component as the inner layer dielectric layer 14a may be included. When the ceramic component is included in the thin film layer 34, a difference in thermal expansion coefficient between the multilayer body 12 and the thin film layer 34 can be reduced, and stress applied to the thin film layer 34 can be relaxed. However, the metal component is not limited to Cu and Ni, and other metal components may be included, or a glass component may be included separately from the ceramic component. As the glass component, for example, it is an oxide of, e.g., Ba (barium), Sr (strontium), Si (silicon), Ca (calcium), Zn, Al, or B (boron). As other metal components, for example, Mg, Cr, Sr, Al, Na, Fe, etc. may be included. Moreover, the thin film layer 34 may have a discontinuous shape. Discontinuous means that it is formed discontinuously when viewed from a direction perpendicular to the longitudinal direction.

For example, when forming the thin film layer 34 with one containing ceramic, there is a method of acquiring a cross-sectional photograph using a digital microscope (manufactured by Keyence Corporation: VHX-5000) or the like after performing cross-section polishing, and performing thickness conversion or the like from the cross-sectional photograph. In other cases, there is also a method of measuring the thickness or the like from an actual observation image of a component cross section by FIB using a scanning electron microscope.

### (Surface Plating Layer)

The surface plating layer 36 includes a first surface plating layer 36a, a second surface plating layer 36b, a third surface plating layer 36c, and a fourth surface plating layer 36d.

The first surface plating layer 36a is disposed so as to cover the first thin film layer 34a and the first base plating layer 32a disposed on the third surface 12c of the multilayer body 12.

The second surface plating layer 36b is disposed so as to cover the second thin film layer 34b and the second base plating layer 32b disposed on the fourth surface 12d of the multilayer body 12.

The third surface plating layer 36c is disposed so as to cover the third thin film layer 34c and the third base plating layer 32c disposed on the third surface 12c of the multilayer body 12.

The fourth surface plating layer 36d is disposed so as to cover the fourth thin film layer 34d and the fourth base plating layer 32d disposed on the fourth surface 12d of the multilayer body 12.

It is preferable that the surface plating layer 36 contains at least one kind of metal selected from, for example, Cu, Ni, Sn, Pb, Au, Ag, Pd, Bi, or Zn, or an alloy containing the metal. It is preferable that the plating layer does not contain glass.

The surface plating layer 36 may be, for example, only Sn plating, or may have a two-layer structure of Ni plating and Sn plating, or a two-layer structure of Ni plating and Cu plating.

Moreover, the thickness of the surface plating layer 36 is preferably, for example, 0.5 µm or more and 10 µm or less.

A metal ratio per unit volume of the surface plating layer is preferably 99 vol% or more.

A thickness per one layer of the surface plating layer is preferably 0.5 µm or more and 10.0 µm or less.

A dimension in the first direction y of the multilayer ceramic capacitor 10 including the multilayer body 12 and the outer electrode 30 is defined as an L dimension, a dimension in the lamination direction x of the multilayer ceramic capacitor 10 including the multilayer body 12 and the outer electrode 30 is defined as a T dimension, and a dimension in the second direction z of the multilayer ceramic capacitor 10 including the multilayer body 12 and the outer electrode 30 is defined as a W dimension.

Regarding dimensions of the multilayer ceramic capacitor 10, it is preferable that the L dimension in the first direction y is 0.2 mm or more and 3.2 mm or less, the T dimension in the lamination direction x is 0.04 mm or more and 0.22 mm or less, and the W dimension in the second direction z is 0.2 mm or more and 3.2 mm or less. The dimensions of the multilayer ceramic capacitor 10 are preferably 0.85 ≤ L/W ≤ 1.00. By doing so, since the multilayer body 12 becomes a substantially square-prism shape, a degree of freedom in mounting is improved.

According to the multilayer ceramic capacitor 10 shown in Fig. 1, by satisfying the condition of 0.85 ≤ L/W ≤ 1.00, the multilayer body 12 has a substantially square-prism shape, and when the dimension in the lamination direction x of the first base plating layer 32a is denoted by t₁, and the dimension in the lamination direction x of the multilayer body 12 is denoted by t₂, since the condition of t₂ - 5 µm ≤ t₁ ≤ t₂ + 2 µm is satisfied, it is possible to ensure that a region where the outer electrode 30 partially protrudes in the lamination direction x is small; therefore, it is possible to reduce a probability of occurrence of cracks to the multilayer ceramic capacitor 10 at the time of mounting.

### 2. Manufacturing Method of Multilayer Ceramic Capacitor

Hereinafter, a manufacturing method of the multilayer ceramic capacitor according to the first embodiment will be described.

First, dielectric sheets and a conductive paste for inner electrodes are prepared. The dielectric sheets and the conductive paste for inner electrodes contain a binder and a solvent. Known binders and solvents can be used.

Next, on the dielectric sheet, the conductive paste for inner electrodes is printed in a predetermined pattern by, for example, inkjet printing, screen printing, or gravure printing. Thereby, a dielectric sheet on which a pattern of the first inner electrode is formed and a dielectric sheet on which a pattern of the second inner electrode is formed are prepared. Thereafter, by laminating the sheet on which the pattern of the first inner electrode is printed and the sheet on which the pattern of the second inner electrode is printed, a portion to become the inner layer portion 18 is formed.

Also, for example, when forming a print pattern of the inner electrode by gravure printing, desired inner electrodes can be respectively formed by designing a gravure plate used in gravure printing as a graphic pattern of the first inner electrode, and changing it to this structure corresponding to a graphic pattern of the second inner electrode.

Furthermore, when forming a print pattern of the inner electrode layer by screen printing, desired inner electrodes can be formed by designing a mask of screen printing as a graphic pattern of the first inner electrode, and changing it to this structure corresponding to a graphic pattern of the second inner electrode.

Next, by laminating a predetermined number of dielectric sheets on which the pattern of the inner electrode is not printed, a portion to become the first outer layer portion 20a on the first surface 12a side is formed. Thereafter, the portion to become the inner layer portion 18 prepared above is laminated, and a predetermined number of dielectric sheets on which the pattern of the inner electrode is not printed are laminated on this portion to become the inner layer portion 18, whereby a portion to become the second outer layer portion 20b on the second surface 12b side is formed. Thus, a laminated sheet is produced.

Next, the laminated sheet is pressed in the lamination direction by means such as hydrostatic pressing to produce a laminated block.

Subsequently, the laminated block is cut into a predetermined size to cut out a laminated chip. At this time, corner portions and ridge line portions of the laminated chip may be rounded by barrel polishing or the like.

Next, the laminated chip is fired to produce the multilayer body 12. The firing temperature depends on materials of the ceramic and the inner electrode, but is preferably 900°C or higher and 1400°C or lower.

At this time, from the third surface 12c of the multilayer body 12, the first extended electrode portion 24a of the first inner electrode 16a and the third extended electrode portion 24c of the second inner electrode 16b are exposed. Moreover, from the fourth surface 12d of the multilayer body 12, the second extended electrode portion 24b of the first inner electrode 16a and the fourth extended electrode portion 24d of the second inner electrode 16b are exposed.

Subsequently, the outer electrodes 30 are formed on the multilayer body 12.

First, the base plating layer 32 is formed so as to cover the inner electrode 16 exposed on the surface of the multilayer body 12. The base plating layer 32 is assumed to be Cu plating, and is formed by electrolytic plating or electroless plating. At this time, heat treatment is performed on the multilayer body 12 after plating to drive off moisture residue left in the plating film or at the interface between the multilayer body 12 and the base plating layer 32. Furthermore, upon formation of the base plating layer 32, the angle θ is adjusted by adjusting the amount of rounding of the multilayer body 12 or adjusting the metal ion concentration in the base plating layer 32 so as to obtain the structure of the present invention.

Next, the multilayer bodies 12 on which the base plating layers 32 are formed are aligned on a workbench, and the thin film layer 34 is formed on the first surface 12a by a sputtering method. Note that by performing heat treatment in a range of 300°C or higher and 600°C or lower after formation of the thin film layer 34, the region Sp shown in Fig. 8C can be formed.

Thereafter, the surface plating layer 36 is formed on the thin film layer 34 and on an external plating region 40 disposed on the surface of the multilayer body 12. More specifically, a Ni plating layer and a Sn plating layer are formed as the surface plating layer 36 on the thin film layer 34. In performing plating treatment, either electrolytic plating or electroless plating may be adopted. However, electroless plating requires pretreatment with a catalyst or the like in order to improve a plating deposition rate, and has a demerit that the process becomes complicated. Therefore, normally, it is preferable to adopt electrolytic plating.

As described above, the multilayer ceramic capacitor 10 according to the embodiment shown in Fig. 1 can be manufactured.

### B. Second Embodiment

### 1. Multilayer Ceramic Capacitor

An example of a multilayer ceramic capacitor 110 according to a second embodiment of the present invention will be described.

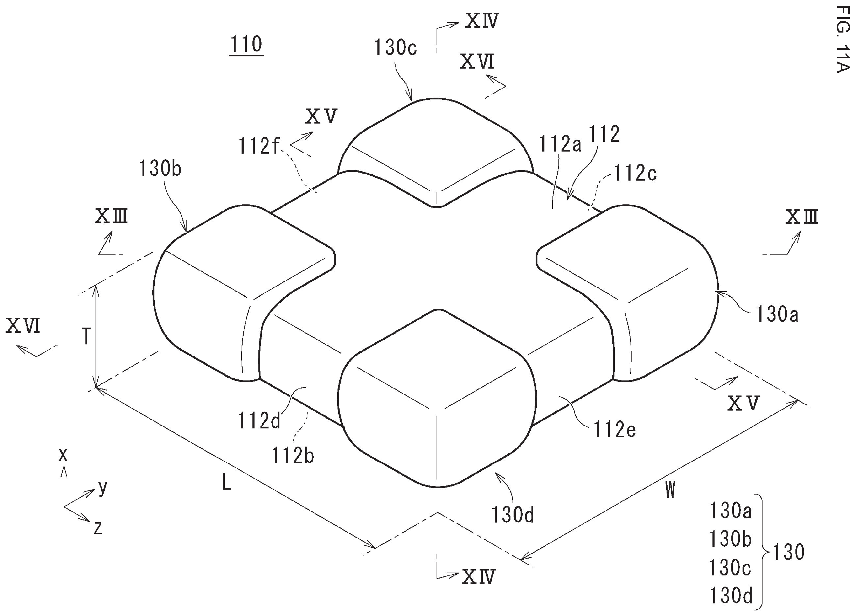

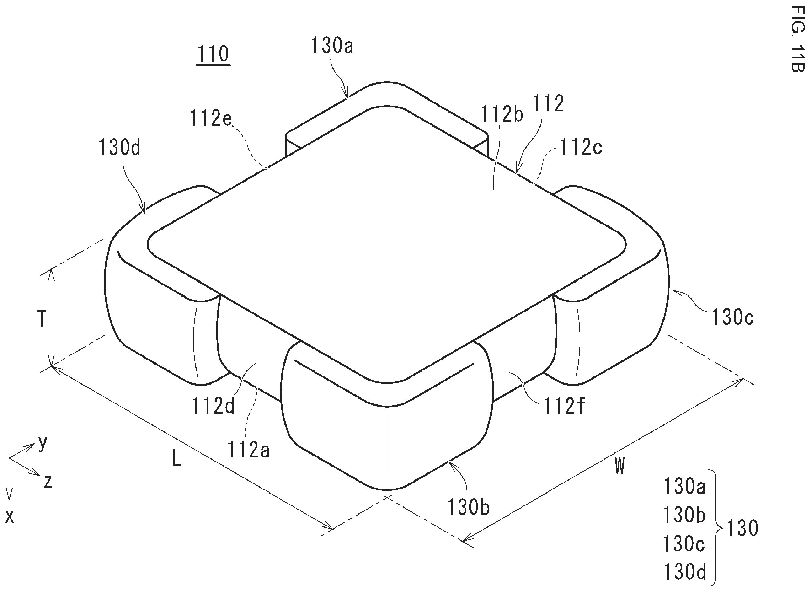

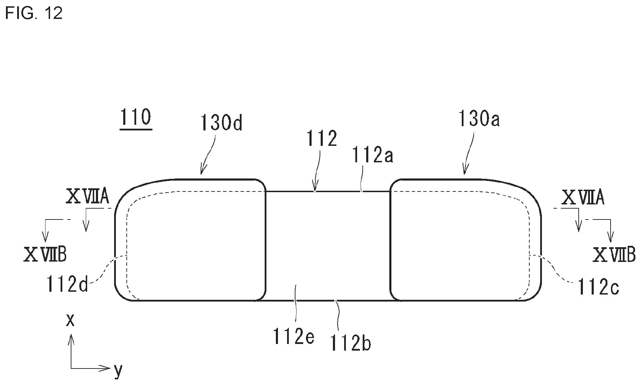

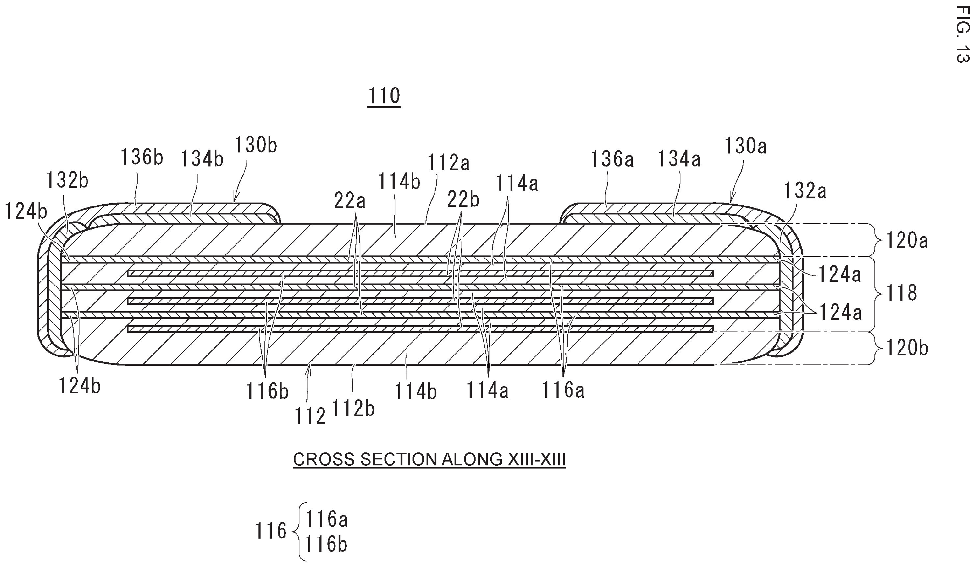

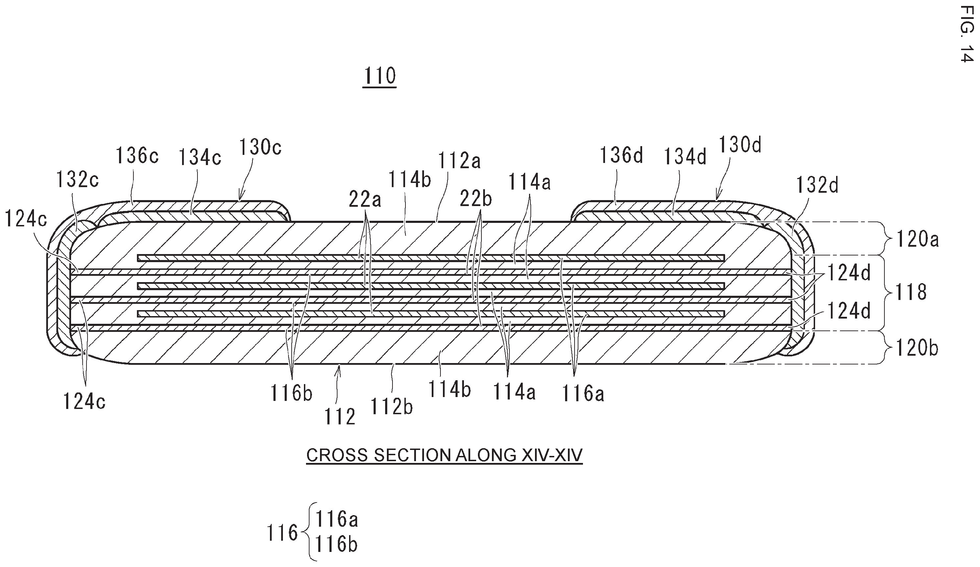

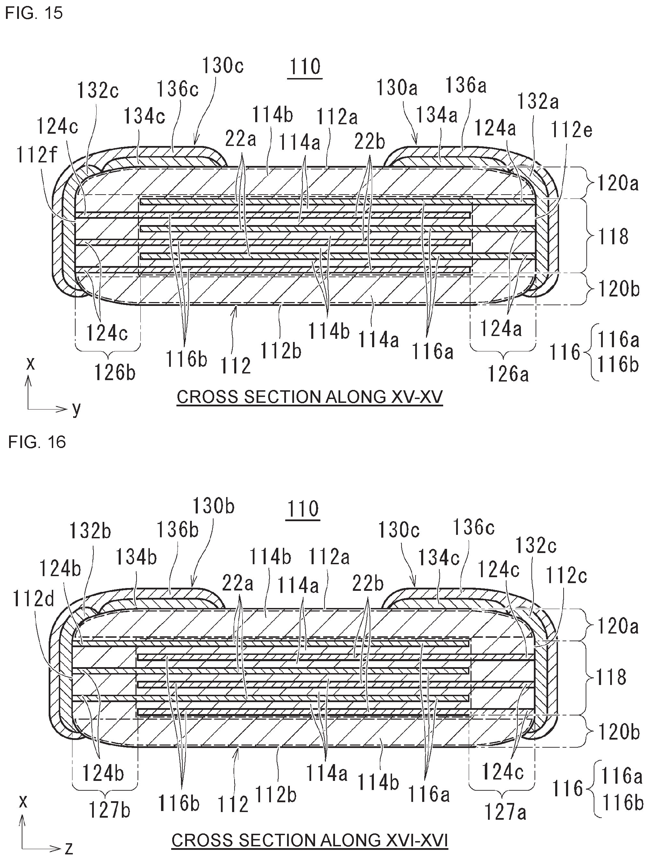

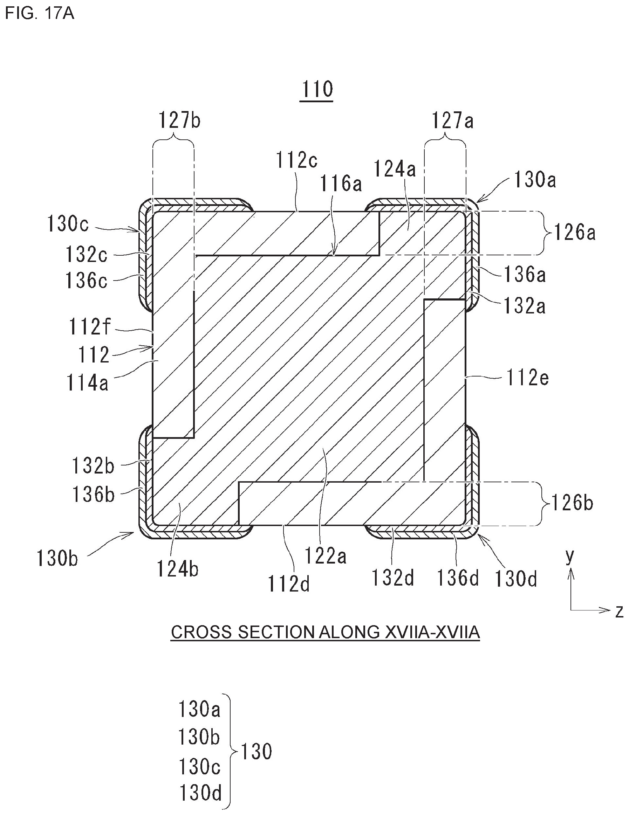

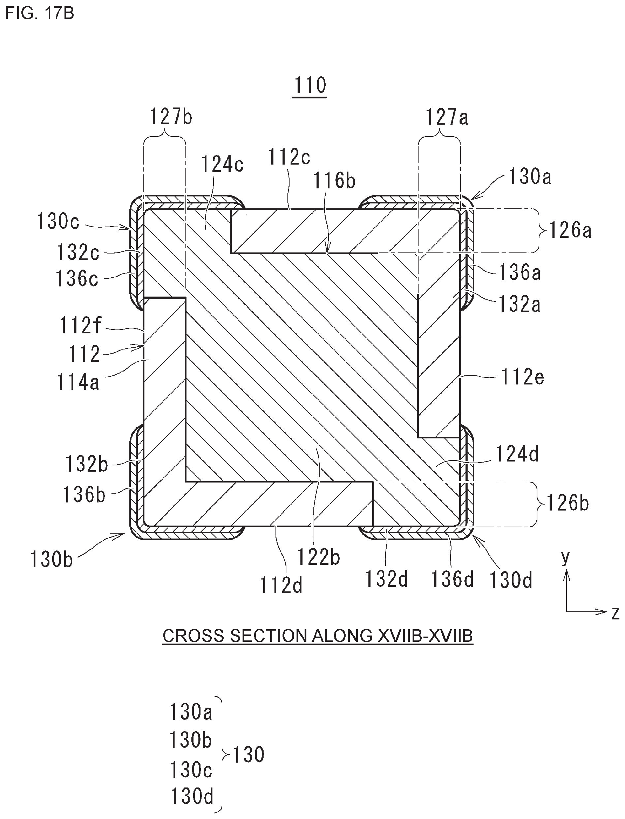

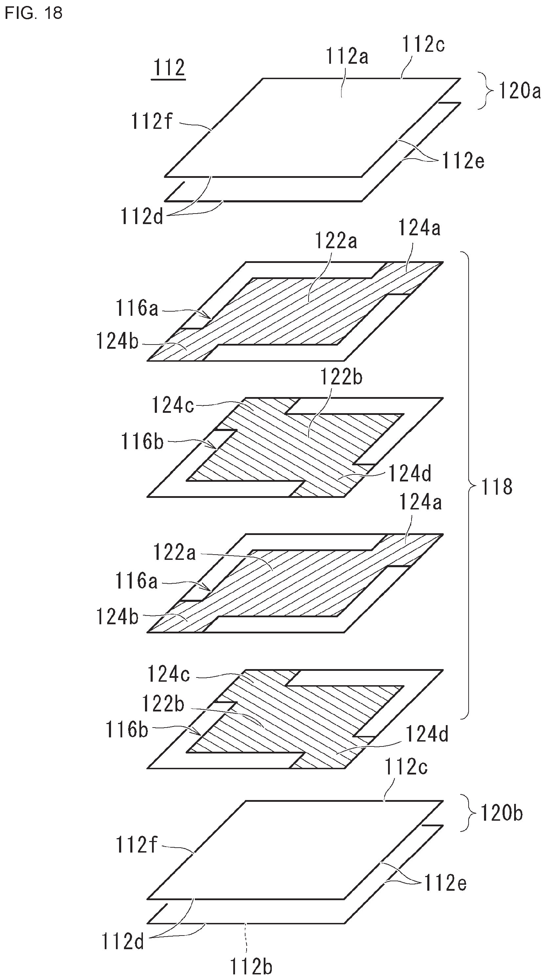

Fig. 11A is an external perspective view from one side showing an example of a multilayer ceramic capacitor according to a second embodiment of the present invention. Fig. 11B is an external perspective view from the other side showing an example of the multilayer ceramic capacitor according to the second embodiment of the present invention. Fig. 12 is a front view showing an example of the multilayer ceramic capacitor according to the second embodiment of the present invention. Fig. 131 is a schematic cross-sectional view along line XIII-XIII according to Fig. 131. Fig. 14 is a schematic cross-sectional view along line XIV-XIV according to Fig. 131. Fig. 15 is a schematic cross-sectional view along line XV-XV according to Fig. 131. Fig. 16 is a schematic cross-sectional view along line XVI-XVI according to Fig. 13. Fig. 17A is a schematic cross-sectional view along line XVIIA-XVIIA according to Fig. 12. Fig. 17B is a schematic cross-sectional view along line XVIIB-XVIIB according to Fig. 12. Fig. 18 is an exploded perspective view of the multilayer body shown in Fig. 11A. Note that the same reference numerals are given to configurations the same as or equivalent to those in Figs. 1 to 7, and detailed description thereof is omitted.

The multilayer ceramic capacitor 110 includes a multilayer body 112 and outer electrodes 130.

### (Multilayer Body)

The multilayer body 12 includes a plurality of dielectric layers 114 and a plurality of inner electrodes 116. The dielectric layers 114 include an inner layer dielectric layer 114a and an outer layer dielectric layer 114b. Moreover, the inner electrodes 116 include a first inner electrode 116a and a second inner electrode 116b.

Further, the multilayer body 112 has an inner layer portion 118, a first outer layer portion 120a located on the first surface 112a side, and a second outer layer portion 120b located on the second surface 112b side.

The first outer layer portion 120a is located on the first surface 112a side of the multilayer body 112, and is an aggregate of a plurality of outer layer dielectric layers 114b located between the first surface 112a and the inner electrode 116 closest to the first surface 112a.

The second outer layer portion 120b is located on the second surface 112b side of the multilayer body 112, and is an aggregate of a plurality of outer layer dielectric layers 114b located between the second surface 112b and the inner electrode 116 closest to the second surface 112b.

Then, a region sandwiched between the first outer layer portion 120a and the second outer layer portion 120b is the inner layer portion 118.

The inner layer portion 118 has the first inner electrode 116a having one end exposed to the third surface 112c and the fifth surface 112e and the other end exposed to the fourth surface 112d and the sixth surface 112f, the second inner electrode 116b having one end exposed to the third surface 112c and the sixth surface 112f and the other end exposed to the fourth surface 112d and the fifth surface 112e, and the inner layer dielectric layer 114a.

Since the material and the like of the dielectric layer 114 are the same as the dielectric layer 14, the description thereof is omitted.

### (Inner Electrode)

The inner electrode 116 has a plurality of first inner electrodes 116a and a plurality of second inner electrodes 116b. The first inner electrodes 116a and the second inner electrodes 116b are alternately laminated via the dielectric layers 114.

The first inner electrode 116a is disposed on a surface of the inner layer dielectric layer 114a. The first inner electrode 116a has a first opposed electrode portion 122a facing the first surface 112a and the second surface 112b and facing the second inner electrode 116b, and is laminated in the direction connecting the first surface 112a and the second surface 112b.

The first inner electrode 116a is extended to the third surface 112c and the fifth surface 112e of the multilayer body 112 by a first extended electrode portion 124a, and is extended to the fourth surface 112d and the sixth surface 112f of the multilayer body 112 by a second extended electrode portion 124b. Note that a width by which the first extended electrode portion 124a is extended to the third surface 112c may be substantially equal to a width by which it is extended to the fifth surface 112e, and a width by which the second extended electrode portion 124b is extended to the fourth surface 112d may be substantially equal to a width by which it is extended to the sixth surface 112f.

Moreover, although the first inner electrode 116a is continuously extended to the third surface 112c and the fifth surface 112e of the multilayer body 112 by the first extended electrode portion 124a, and is continuously extended to the fourth surface 112d and the sixth surface 112f of the multilayer body 112 by the second extended electrode portion 124b, it is not limited to this, and may be extended discontinuously.

The second inner electrode 116b is disposed on a surface of an inner layer dielectric layer 114a different from the inner layer dielectric layer 114a on which the first inner electrode 116a is disposed. The second inner electrode 116b has a second opposed electrode portion 122b facing the first surface 112a and the second surface 112b and facing the first inner electrode 116a, and is laminated in the direction connecting the first surface 112a and the second surface 112b.

The second inner electrode 116b is extended to the third surface 112c and the sixth surface 112f of the multilayer body 112 by a third extended electrode portion 124c, and is extended to the fourth surface 112d and the fifth surface 112e of the multilayer body 112 by a fourth extended electrode portion 124d. Note that a width by which the third extended electrode portion 124c is extended to the third surface 112c may be substantially equal to a width by which it is extended to the sixth surface 112f, and a width by which the fourth extended electrode portion 124d is extended to the fourth surface 112d may be substantially equal to a width by which it is extended to the fifth surface 112e.

Moreover, although the second inner electrode 116b is continuously extended to the third surface 112c and the sixth surface 112f of the multilayer body 112 by the third extended electrode portion 124c, and is continuously extended to the fourth surface 112d and the fifth surface 112e of the multilayer body 112 by the fourth extended electrode portion 124d, it is not limited to this, and may be extended discontinuously.

Moreover, when the multilayer ceramic capacitor 110 is viewed from the lamination direction x, it is preferable that a straight line connecting the first extended electrode portion 124a and the second extended electrode portion 124b of the first inner electrode 116a and a straight line connecting the third extended electrode portion 124c and the fourth extended electrode portion 124d of the second inner electrode 116b intersect.

Further, as shown in Fig. 15, the multilayer body 112 includes a side portion (W gap) 126a of the multilayer body 12 located between one end in the first direction y of the second opposed electrode portion 122b of the second inner electrode 116b and the third surface 112c, and a side portion (W gap) 126b of the multilayer body 112 located between the other end in the first direction y of the first opposed electrode portion 122a of the first inner electrode 116a and the fourth surface 112d.

Furthermore, as shown in Fig. 16, the multilayer body 112 includes an end portion (L gap) 127a of the multilayer body 112 located between one end in the second direction z of the second opposed electrode portion 122b of the second inner electrode 116b and the fifth surface 112e, and a side portion (L gap) 127b of the multilayer body 112 located between the other end in the second direction z of the first opposed electrode portion 122a of the first inner electrode 116a and the sixth surface 112f.

### (Outer Electrode)

In the multilayer ceramic capacitor 110 according to the second embodiment, the outer electrode 130 is disposed so as to cover the first surface 112a of the multilayer body 112 and not to cover the second surface 112b.

As shown in Figs. 11A to 16, the outer electrodes 130 are disposed on the multilayer body 112.

The outer electrodes 130 have a plurality of outer electrodes 130 connected to the first inner electrode 116a and the second inner electrode 116b. The outer electrodes 130 have a first outer electrode 130a, a second outer electrode 130b, a third outer electrode 130c, and a fourth outer electrode 130d.

The first outer electrode 130a is disposed on the third surface 112c and the fifth surface 112e so as to cover the first extended electrode portion 124a of the first inner electrode 116a, and further, the first outer electrode 130a is disposed so as to cover a part of the first surface 112a. The first outer electrode 130a is electrically connected to the first extended electrode portion 124a of the first inner electrode 116a.

The second outer electrode 130b is disposed on the fourth surface 112d and the sixth surface 112f so as to cover the second extended electrode portion 124b of the first inner electrode 116a, and further, the second outer electrode 130b is disposed so as to cover a part of the first surface 112a. The second outer electrode 130b is electrically connected to the second extended electrode portion 124b of the first inner electrode 116a.

The third outer electrode 130c is disposed on the third surface 112c and the sixth surface 112f so as to cover the third extended electrode portion 124c of the second inner electrode 116b, and further, the third outer electrode 130c is disposed so as to cover a part of the first surface 112a. The third outer electrode 130c is electrically connected to the third extended electrode portion 124c of the second inner electrode 116b.

The fourth outer electrode 130d is disposed on the fourth surface 112d and the fifth surface 112e so as to cover the fourth extended electrode portion 124d of the second inner electrode 116b, and further, the fourth outer electrode 130d is disposed so as to cover a part of the first surface 112a. The fourth outer electrode 130d is electrically connected to the fourth extended electrode portion 124d of the second inner electrode 116b.

In the multilayer body 112, the first opposed electrode portion 122a of the first inner electrode 116a and the second opposed electrode portion 122b of the second inner electrode 116b are opposed via the inner layer dielectric layer 114a, whereby electric capacity is formed. Therefore, electric capacity can be obtained between the first and second outer electrodes 130a and 130b to which the first inner electrode 116a is connected, and the third and fourth outer electrodes 130c and 130d to which the second inner electrode 116b is connected, whereby characteristics of a capacitor are exhibited.

The first outer electrode 130a, the second outer electrode 130b, the third outer electrode 130c, and the fourth outer electrode 130d each have a base plating layer 132, a thin film layer 134, and a surface plating layer 136.

In other words, the first outer electrode 130a has a first base plating layer 132a, a first thin film layer 134a, and a first surface plating layer 136a. The second outer electrode 130b has a second base plating layer 132b, a second thin film layer 134b, and a second surface plating layer 136b. The third outer electrode 130c has a third base plating layer 132c, a third thin film layer 134c, and a third surface plating layer 136c. The fourth outer electrode 130d has a fourth base plating layer 132d, a fourth thin film layer 134d, and a fourth surface plating layer 136d.

### (Base Plating Layer)

The base plating layer 132 is disposed on the third surface 112c to the sixth surface 112f. Hereinafter, a specific configuration of the base plating layer 132 will be described.

The first base plating layer 132a is disposed on a surface of the third surface 112c and the fifth surface 112e of the multilayer body 112 so as to cover the first extended electrode portion 124a of the first inner electrode 116a exposed from the third surface 112c and the fifth surface 112e of the multilayer body 112.

The second base plating layer 132b is disposed on a surface of the fourth surface 112d and the sixth surface 112f of the multilayer body 112 so as to cover the second extended electrode portion 124b of the first inner electrode 116a exposed from the fourth surface 112d and the sixth surface 112f of the multilayer body 112.

The third base plating layer 132c is disposed on a surface of the third surface 112c and the sixth surface 112f of the multilayer body 112 so as to cover the third extended electrode portion 124c of the second inner electrode 116b exposed from the third surface 112c and the sixth surface 112f of the multilayer body 112.

The fourth base plating layer 132d is disposed on a surface of the fourth surface 112d and the fifth surface 112e of the multilayer body 112 so as to cover the fourth extended electrode portion 124d of the second inner electrode 116b exposed from the fourth surface 112d and the fifth surface 112e of the multilayer body 112.

Note that the first base plating layer 132a of the first outer electrode 130a is preferably disposed on a ridge line portion formed by the first surface 112a and the third surface 112c and the fifth surface 112e of the multilayer body 112. An upper end of the first base plating layer 132a of the first outer electrode 130a may be disposed so as to overlap with the lower side of the first thin film layer 134a on the ridge line portion formed by the first surface 112a and the third surface 112c and the fifth surface 112e of the multilayer body 112, or may be disposed to be isolated. At this time, the first base plating layer 132a may be disposed so as to cover a ridge line portion between the third surface 112c and the fifth surface 112e.

The second base plating layer 132b of the second outer electrode 130b is preferably disposed on a ridge line portion formed by the first surface 112a and the fourth surface 112d and the sixth surface 112f of the multilayer body 112. An upper end of the second base plating layer 132b of the second outer electrode 130b may be disposed so as to overlap with the lower side of the second thin film layer 134b on the ridge line portion formed by the first surface 112a and the fourth surface 112d and the sixth surface 112f of the multilayer body 112, or may be disposed to be isolated. At this time, the second base plating layer 132b may be disposed so as to cover a ridge line portion between the fourth surface 112d and the sixth surface 112f.

The third base plating layer 132c of the third outer electrode 130c is preferably disposed on a ridge line portion formed by the first surface 112a and the third surface 112c and the sixth surface 112f of the multilayer body 112. An upper end of the third base plating layer 132c of the third outer electrode 130c may be disposed so as to overlap with the lower side of the third thin film layer 134c on the ridge line portion formed by the first surface 112a and the third surface 112c and the sixth surface 112f of the multilayer body 112, or may be disposed to be isolated. At this time, the third base plating layer 132c may be disposed so as to cover a ridge line portion between the third surface 112c and the sixth surface 112f.

The fourth base plating layer 132d of the fourth outer electrode 130d is preferably disposed on a ridge line portion formed by the first surface 112a and the fourth surface 112d and the fifth surface 112e of the multilayer body 112. An upper end of the fourth base plating layer 132d of the fourth outer electrode 130d may be disposed so as to overlap with the lower side of the fourth thin film layer 134d on the ridge line portion formed by the first surface 112a and the fourth surface 112d and the fifth surface 112e of the multilayer body 112, or may be disposed to be isolated. At this time, the fourth base plating layer 132d may be disposed so as to cover a ridge line portion between the fourth surface 112d and the fifth surface 112e.

Here, regarding the first base plating layer 132a of the multilayer ceramic capacitor 110 as well, similarly to the first base plating layer 32a of the multilayer ceramic capacitor 10, when a dimension in the lamination direction x of the first base plating layer 132a is denoted by t₁, and a dimension in the lamination direction x of the multilayer body 112 is denoted by t₂, the condition of t₂ - 5 µm ≤ t₁ ≤ t₂ + 2 µm is satisfied. Moreover, the first base plating layer 132a is preferably located at 5 µm or less from a point where the dimension in the lamination direction x of the multilayer body 112 is the highest.

Also, regarding the first base plating layer 132a of the multilayer ceramic capacitor 110, similarly to the first base plating layer 32a of the multilayer ceramic capacitor 10, when a first point where the first base plating layer 132a and the multilayer body 112 intersect is set as a reference point, an intersection of a line passing through a position 3 µm inward of the multilayer body 112 from the first point and parallel to the lamination direction x and the multilayer body 112 is set as a second point, and a point where a line passing through a position 1 µm outward of the multilayer body 112 from the first point and parallel to the lamination direction x and the first base plating layer 132a intersect is set as a third point, an angle θ formed by a first straight line x₁ connecting the first point and the second point and a second straight line x₂ connecting the first point and the third point is preferably 88° or more and 160° or less.

The structure of the first base plating layer 132a included in the first outer electrode 130a described above is also possessed by the second base plating layer 132b included in the second outer electrode 130b, the base plating layer 132c included in the third outer electrode 130c, and the base plating layer 132d constituting the fourth outer electrode 130d.

### (Thin Film Layer)

The thin film layer 134 covers the first surface 112a. Moreover, it is preferable that the thin film layer 134 covers the base plating layer 132. Thereby, intrusion of moisture entering from the base plating layer 132 can be suppressed. The thin film layer 134 has a first thin film layer 134a, a second thin film layer 134b, a third thin film layer 134c, and a fourth thin film layer 134d.

The first thin film layer 134a covers a part of the first surface 112a of the multilayer body 112 on the third surface 112c side and the fifth surface 112e side, and is disposed so as not to cover the second surface 112b, the third surface 112c, and the fifth surface 112e of the multilayer body 112. The first thin film layer 134a may be disposed to be isolated from the first base plating layer 132a, or may be disposed to overlap the first base plating layer 132a. A surface of the first surface plating layer 136a described later may be shaped to have a recess.

The second thin film layer 134b covers a part of the first surface 112a of the multilayer body 112 on the fourth surface 112d side and the sixth surface 112f side, and is disposed so as not to cover the second surface 112b, the fourth surface 112d, and the sixth surface 112f of the multilayer body 112. The second thin film layer 134b may be disposed to be isolated from the second base plating layer 132b, or may be disposed to overlap the second base plating layer 132b. A surface of the second surface plating layer 136b described later may be shaped to have a recess.

The third thin film layer 134c covers a part of the first surface 112a of the multilayer body 112 on the third surface 112c side and the sixth surface 112f side, and is disposed so as not to cover the second surface 112b, the third surface 112c, and the sixth surface 112f of the multilayer body 112. The third thin film layer 134c may be disposed to be isolated from the third base plating layer 132c, or may be disposed to overlap the third base plating layer 132c. A surface of the third surface plating layer 136c described later may be shaped to have a recess.

The fourth thin film layer 134d covers a part of the first surface 112a of the multilayer body 112 on the fourth surface 112d side and the fifth surface 112e side, and is disposed so as not to cover the second surface 112b, the fourth surface 112d, and the fifth surface 112e of the multilayer body 112. The fourth thin film layer 134d may be disposed to be isolated from the fourth base plating layer 132d, or may be disposed to overlap the fourth base plating layer 132d. A surface of the fourth surface plating layer 136d described later may be shaped to have a recess.

Each of the first thin film layer 134a to the fourth thin film layer 134d is preferably one in which metal particles are deposited and which is formed by a sputtering method, an evaporation method, or the like. Thereby, a thickness of each of the first thin film layer 134a to the fourth thin film layer 134d in the direction connecting the first surface 12a and the second surface 12b of the multilayer body 12 can be 1 µm or less, and since the dimension of the multilayer ceramic capacitor 110 in the lamination direction x can be made sufficiently small, the height of the multilayer ceramic capacitor 110 can be reduced.

### (Surface Plating Layer)

The surface plating layer 136 includes a first surface plating layer 136a, a second surface plating layer 136b, a third surface plating layer 136c, and a fourth surface plating layer 136d.

The first surface plating layer 136a is disposed so as to cover the first thin film layer 134a and the first base plating layer 132a disposed on the third surface 112c and the fifth surface 112e of the multilayer body 112.

The second surface plating layer 136b is disposed so as to cover the second thin film layer 134b and the second base plating layer 132b disposed on the fourth surface 112d and the sixth surface 112f of the multilayer body 112.

The third surface plating layer 136c is disposed so as to cover the third thin film layer 134c and the third base plating layer 132c disposed on the third surface 112c and the sixth surface 112f of the multilayer body 112.

The fourth surface plating layer 136d is disposed so as to cover the fourth thin film layer 134d and the fourth base plating layer 132d disposed on the fourth surface 112d and the fifth surface 112e of the multilayer body 112.

It is preferable that the surface plating layer 136 contains at least one kind of metal selected from, for example, Cu, Ni, Sn, Pb, Au, Ag, Pd, Bi, or Zn, or an alloy containing the metal. It is preferable that the plating layer does not contain glass.

The surface plating layer 136 may be, for example, only Sn plating, or may have a two-layer structure of Ni plating and Sn plating, or a two-layer structure of Ni plating and Cu plating.

In the multilayer ceramic capacitor 110 shown in Fig. 11A, the same effects as those of the multilayer ceramic capacitor 10 according to the first embodiment are exhibited.

### 2. Manufacturing Method of Multilayer Ceramic Capacitor

Hereinafter, a manufacturing method of the multilayer ceramic capacitor according to the second embodiment will be described.

First, dielectric sheets and a conductive paste for inner electrodes are prepared. The dielectric sheets and the conductive paste for inner electrodes contain a binder and a solvent. Known binders and solvents can be used.

Next, on the dielectric sheet, the conductive paste for inner electrodes is printed in a predetermined pattern by, for example, inkjet printing, screen printing, or gravure printing. Thereby, a dielectric sheet on which a pattern of the first inner electrode is formed and a dielectric sheet on which a pattern of the second inner electrode is formed are prepared. Thereafter, by laminating the sheet on which the pattern of the first inner electrode is printed and the sheet on which the pattern of the second inner electrode is printed, a portion to become the inner layer portion 18 is formed.

Next, by laminating a predetermined number of dielectric sheets on which the pattern of the inner electrode is not printed, a portion to become the first outer layer portion 120a on the first surface 112a side is formed. Thereafter, the portion to become the inner layer portion 118 prepared above is laminated, and a predetermined number of dielectric sheets on which the pattern of the inner electrode is not printed are laminated on this portion to become the inner layer portion 118, whereby a portion to become the second outer layer portion 120b on the second surface 112b side is formed. Thus, a laminated sheet is produced.

Next, the laminated sheet is pressed in the lamination direction by means such as hydrostatic pressing to produce a laminated block.

Subsequently, the laminated block is cut into a predetermined size to cut out a laminated chip. At this time, corner portions and ridge line portions of the laminated chip may be rounded by barrel polishing or the like.

Next, the laminated chip is fired to produce the multilayer body 112. The firing temperature depends on materials of the ceramic and the inner electrode, but is preferably 900°C or higher and 1400°C or lower.

At this time, from the third surface 112c of the multilayer body 112, the first extended electrode portion 124a of the first inner electrode 116a and the third extended electrode portion 124c of the second inner electrode 116b are exposed. Moreover, from the fourth surface 112d of the multilayer body 112, the second extended electrode portion 124b of the first inner electrode 116a and the fourth extended electrode portion 124d of the second inner electrode 116b are exposed.

Further, from the fifth surface 112e of the multilayer body 112, the first extended electrode portion 124a of the first inner electrode 116a and the fourth extended electrode portion 124d of the second inner electrode 116b are exposed. Moreover, from the sixth surface 112f of the multilayer body 112, the second extended electrode portion 124b of the first inner electrode 116a and the third extended electrode portion 124c of the second inner electrode 116b are exposed.

Subsequently, the outer electrodes 130 are formed on the multilayer body 112.

First, the base plating layer 132 is formed so as to cover the inner electrode 116 exposed on the surface of the multilayer body 112. The base plating layer 132 is assumed to be Cu plating, and is formed by electrolytic plating or electroless plating. At this time, heat treatment is performed on the multilayer body 112 after plating to drive off moisture residue left in the plating film or at the interface between the multilayer body 112 and the base plating layer 132. Furthermore, upon formation of the base plating layer 132, the angle θ is adjusted by adjusting the amount of rounding of the multilayer body 112 or adjusting the metal ion concentration in the base plating layer 132 so as to obtain the structure of the present invention.

Next, the multilayer bodies 112 on which the base plating layers 132 are formed are aligned on a workbench, and the thin film layer 134 is formed on the first surface 112a and the second surface 112b by a sputtering method.

Thereafter, the surface plating layer 136 is formed on the thin film layer 134 and on the surface of the multilayer body 112. More specifically, a Ni plating layer and a Sn plating layer are formed as the surface plating layer 136 on the thin film layer 134. In performing plating treatment, either electrolytic plating or electroless plating may be adopted. However, electroless plating requires pretreatment with a catalyst or the like in order to improve a plating deposition rate, and has a demerit that the process becomes complicated. Therefore, normally, it is preferable to adopt electrolytic plating.

At this time, the outer electrode 130 disposed on a side surface where the inner electrode 116 is not extended is formed by the surface plating layer 136 in a U-shape so as to cover both short sides of the side surface where the inner electrode 116 is not extended and a portion from an end portion of both short sides to an intermediate portion of both long sides.

As described above, the multilayer ceramic capacitor 110 as shown in Fig. 11A is manufactured.

### C. Third Embodiment

### 1. Multilayer Ceramic Capacitor

An example of a multilayer ceramic capacitor 210 according to a third embodiment of the present invention will be described.

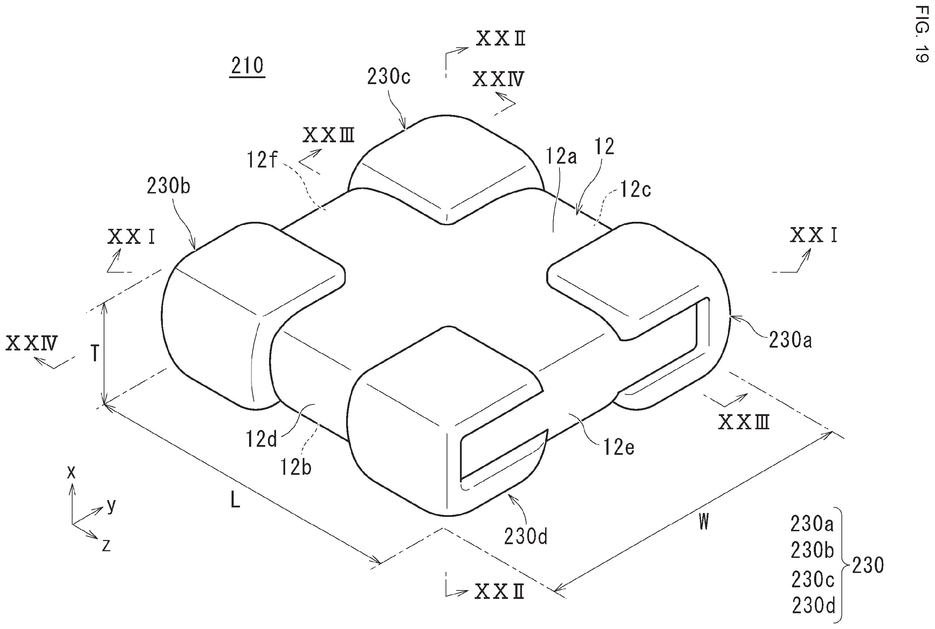

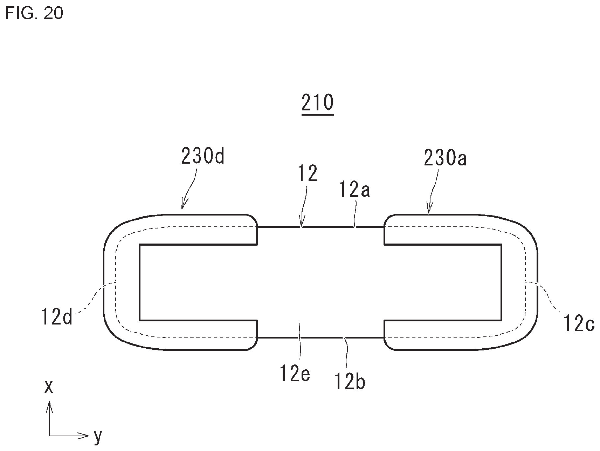

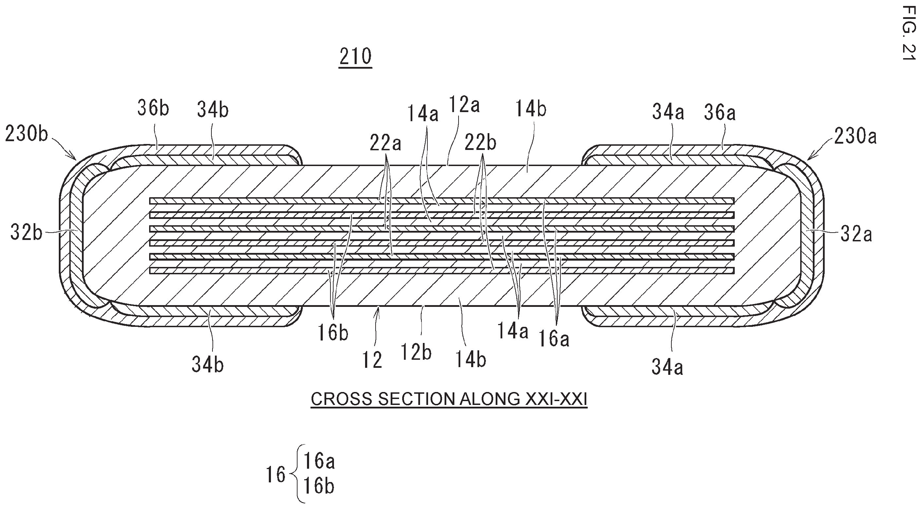

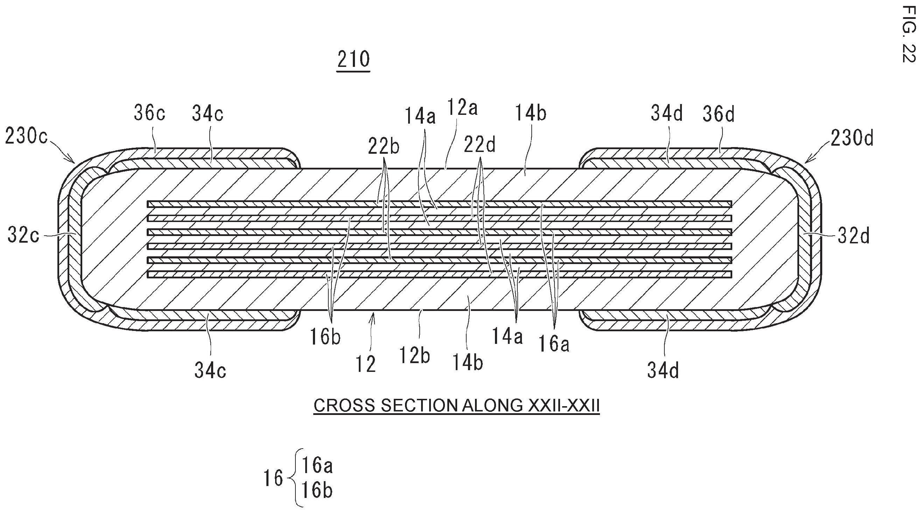

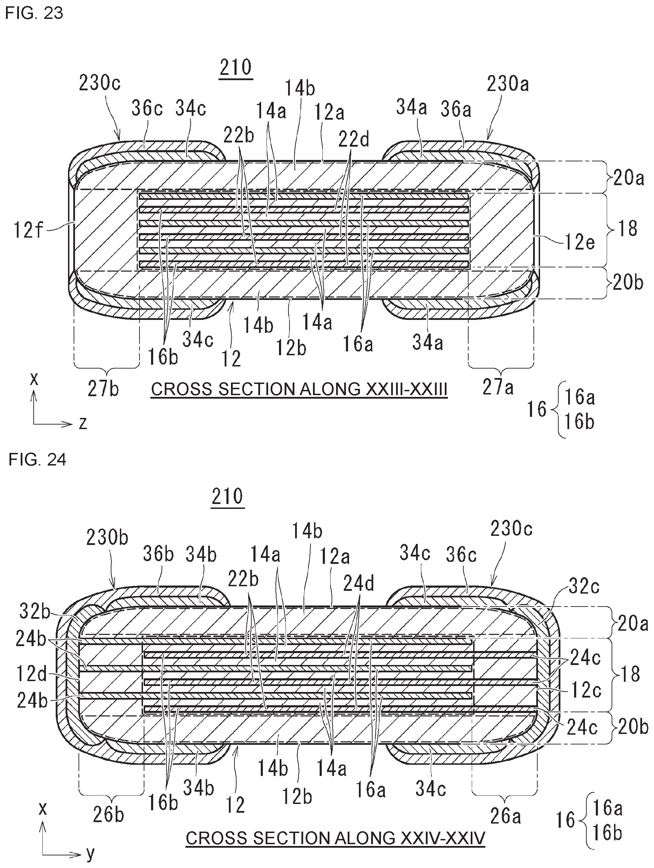

Fig. 19 is an external perspective view showing an example of a multilayer ceramic capacitor according to a third embodiment of the present invention. Fig. 20 is a front view showing an example of the multilayer ceramic capacitor according to the third embodiment of the present invention. Fig. 21 is a schematic cross-sectional view along line XXI-XXI according to Fig. 19. Fig. 22 is a schematic cross-sectional view along line XXII-XXII according to Fig. 19. Fig. 23 is a schematic cross-sectional view along line XXIII-XXIII according to Fig. 19. Fig. 24 is a schematic cross-sectional view along line XXIV-XXIV according to Fig. 19. Note that the same reference numerals are given to configurations the same as or equivalent to those in Figs. 1 to 7, and detailed description thereof is omitted.

The multilayer ceramic capacitor 210 includes a multilayer body 12 and a plurality of outer electrodes 230.

### (Multilayer Body)

In the multilayer ceramic capacitor 210 according to the third embodiment, the multilayer body 12 has the same configuration as the multilayer body 12 of the first embodiment of the present invention shown in Fig. 1.

### (Inner Electrode)

The inner electrode 16 has a plurality of first inner electrodes 16a and a plurality of second inner electrodes 16b. The first inner electrodes 16a and the second inner electrodes 16b are alternately laminated via the dielectric layers 14.

The first inner electrode 16a is disposed on a surface of the inner layer dielectric layer 14a. The first inner electrode 16a has a first opposed electrode portion 22a facing the first surface 12a and the second surface 12b and facing the second inner electrode 16b, and is laminated in the direction connecting the first surface 12a and the second surface 12b.

The first inner electrode 16a is extended to the third surface 12c of the multilayer body 12 by a first extended electrode portion 24a, and is extended to the fourth surface 12d of the multilayer body 12 by a second extended electrode portion 24b. The first extended electrode portion 24a is extended to the fifth surface 12e side of the multilayer body 12, and the second extended electrode portion 24b is extended to the sixth surface 12f side of the multilayer body 12.

The second inner electrode 16b is disposed on a surface of an inner layer dielectric layer 14a different from the inner layer dielectric layer 14a on which the first inner electrode 16a is disposed. The second inner electrode 16b has a second opposed electrode portion 22b facing the first surface 12a and the second surface 12b and facing the first inner electrode 16a, and is laminated in the direction connecting the first surface 12a and the second surface 12b.

The second inner electrode 16b is extended to the third surface 12c of the multilayer body 12 by a third extended electrode portion 24c, and is extended to the fourth surface 12d of the multilayer body 12 by a fourth extended electrode portion 24d. The third extended electrode portion 24c is extended to the sixth surface 12f side of the multilayer body 12, and the fourth extended electrode portion 24d is extended to the fifth surface 12e side of the multilayer body 12.

The first inner electrode 16a and the second inner electrode 16b are not exposed to the fifth surface 12e and the sixth surface 12f of the multilayer body 12.

Moreover, when the multilayer ceramic capacitor 210 is viewed from the lamination direction x, it is preferable that a straight line connecting the first extended electrode portion 24a and the second extended electrode portion 24b of the first inner electrode 16a and a straight line connecting the third extended electrode portion 24c and the fourth extended electrode portion 24d of the second inner electrode 16b intersect.

Furthermore, on the surfaces 12c, 12d, 12e, and 12f of the multilayer body 12, it is preferable that the first extended electrode portion 24a of the first inner electrode 16a and the fourth extended electrode portion 24d of the second inner electrode 16b are extended to opposing positions, and the second extended electrode portion 24b of the first inner electrode 16a and the third extended electrode portion 24c of the second inner electrode 16b are extended to opposing positions.

Further, as shown in Fig. 24, the multilayer body 12 includes a side portion (W gap) 26a of the multilayer body 12 located between one end in the first direction y of the second opposed electrode portion 22b of the second inner electrode 16b and the third surface 12c, and a side portion (W gap) 26b of the multilayer body 12 located between the other end in the first direction y of the first opposed electrode portion 22a of the first inner electrode 16a and the fourth surface 12d.

Furthermore, as shown in Fig. 23, the multilayer body 12 includes an end portion (L gap) 27a of the multilayer body 12 located between one end in the second direction z of the second opposed electrode portion 22b of the second inner electrode 16b and the fifth surface 12e, and a side portion (L gap) 27b of the multilayer body 12 located between the other end in the second direction z of the first opposed electrode portion 22a of the first inner electrode 16a and the sixth surface 12f.

### (Outer Electrode)

As shown in Figs. 19 to 24, the outer electrodes 230 are disposed on the multilayer body 12.

The outer electrodes 230 have a plurality of outer electrodes 230 connected to the first inner electrode 16a and the second inner electrode 16b. The outer electrodes 230 have a first outer electrode 230a, a second outer electrode 230b, a third outer electrode 230c, and a fourth outer electrode 230d.

The first outer electrode 230a is disposed on the third surface 12c so as to cover the first extended electrode portion 24a of the first inner electrode 16a, and further, the first outer electrode 230a is disposed so as to cover a part of the first surface 12a and a part of the second surface 12b. The first outer electrode 230a is electrically connected to the first extended electrode portion 24a of the first inner electrode 16a.

The second outer electrode 230b is disposed on the fourth surface 12d so as to cover the second extended electrode portion 24b of the first inner electrode 16a, and further, the second outer electrode 230b is disposed so as to cover a part of the first surface 12a and a part of the second surface 12b. The second outer electrode 230b is electrically connected to the second extended electrode portion 24b of the first inner electrode 16a.

The third outer electrode 230c is disposed on the third surface 12c so as to cover the third extended electrode portion 24c of the second inner electrode 16b, and further, the third outer electrode 230c is disposed so as to cover a part of the first surface 12a and a part of the second surface 12b. The third outer electrode 230c is electrically connected to the third extended electrode portion 24c of the second inner electrode 16b.

The fourth outer electrode 230d is disposed on the fourth surface 12d so as to cover the fourth extended electrode portion 24d of the second inner electrode 16b, and further, the fourth outer electrode 230d is disposed so as to cover a part of the first surface 12a and a part of the second surface 12b. The fourth outer electrode 230d is electrically connected to the fourth extended electrode portion 24d of the second inner electrode 16b.

Furthermore, as shown in Fig. 20, it is preferable that the outer electrode 230 disposed on the fifth surface 12e or the sixth surface 12f where the inner electrode 16 is not extended covers, in a U-shape, either one short side of the side surface where the inner electrode 16 is not extended and portions from end portions of the short side to intermediate portions of the respective long sides .

In the multilayer body 12, the first opposed electrode portion 22a of the first inner electrode 16a and the second opposed electrode portion 22b of the second inner electrode 16b are opposed via the inner layer dielectric layer 14a, whereby electric capacity is formed. Therefore, electric capacity can be obtained between the first and second outer electrodes 230a and 230b to which the first inner electrode 16a is connected, and the third and fourth outer electrodes 230c and 230d to which the second inner electrode 16b is connected, whereby characteristics of a capacitor are exhibited.

It is preferable that the first outer electrode 230a, the second outer electrode 230b, the third outer electrode 230c, and the fourth outer electrode 230d each have a base plating layer 32, a thin film layer 34, and a surface plating layer 36.

In other words, the first outer electrode 230a has a first base plating layer 32a, a first thin film layer 34a, and a first surface plating layer 36a. The second outer electrode 230b has a second base plating layer 32b, a second thin film layer 34b, and a second surface plating layer 36b. The third outer electrode 230c has a third base plating layer 32c, a third thin film layer 34c, and a third surface plating layer 36c. The fourth outer electrode 230d has a fourth base plating layer 32d, a fourth thin film layer 34d, and a fourth surface plating layer 36d.

### (Base Plating Layer)

The base plating layer 32 is disposed on the third surface 12c and the fourth surface 12d. Hereinafter, a specific configuration of the base plating layer 32 will be described.

The first base plating layer 32a is disposed on a surface of the third surface 12c of the multilayer body 12 so as to cover the first extended electrode portion 24a of the first inner electrode 16a exposed from the third surface 12c of the multilayer body 12.

The second base plating layer 32b is disposed on a surface of the fourth surface 12d of the multilayer body 12 so as to cover the second extended electrode portion 24b of the first inner electrode 16a exposed from the fourth surface 12d of the multilayer body 12.

The third base plating layer 32c is disposed on a surface of the third surface 12c of the multilayer body 12 so as to cover the third extended electrode portion 24c of the second inner electrode 16b exposed from the third surface 12c of the multilayer body 12.

The fourth base plating layer 32d is disposed on a surface of the fourth surface 12d of the multilayer body 12 so as to cover the fourth extended electrode portion 24d of the second inner electrode 16b exposed from the fourth surface 12d of the multilayer body 12.

Note that the first base plating layer 32a of the first outer electrode 230a is preferably disposed on a ridge line portion formed by the first surface 12a and the third surface 12c of the multilayer body 12. An upper end of the first base plating layer 32a of the first outer electrode 230a may be disposed so as to overlap with the lower side of the first thin film layer 34a on the ridge line portion formed by the first surface 12a and the third surface 12c of the multilayer body 12, or may be disposed to be isolated. The same applies to the second surface 12b side.

The second base plating layer 32b of the second outer electrode 230b is preferably disposed on a ridge line portion formed by the first surface 12a and the fourth surface 12d of the multilayer body 12. An upper end of the second base plating layer 32b of the second outer electrode 230b may be disposed so as to overlap with the lower side of the second thin film layer 34b on the ridge line portion formed by the first surface 12a and the fourth surface 12d of the multilayer body 12, or may be disposed to be isolated. The same applies to the second surface 12b side.

The third base plating layer 32c of the third outer electrode 230c is preferably disposed on a ridge line portion formed by the first surface 12a and the third surface 12c of the multilayer body 12. An upper end of the third base plating layer 32c of the third outer electrode 230c may be disposed so as to overlap with the lower side of the third thin film layer 34c on the ridge line portion formed by the first surface 12a and the third surface 12c of the multilayer body 12, or may be disposed to be isolated. The same applies to the second surface 12b side.

The fourth base plating layer 32d of the fourth outer electrode 230d is preferably disposed on a ridge line portion formed by the first surface 12a and the fourth surface 12d of the multilayer body 12. An upper end of the fourth base plating layer 32d of the fourth outer electrode 230d may be disposed so as to overlap with the lower side of the fourth thin film layer 34d on the ridge line portion formed by the first surface 12a and the fourth surface 12d of the multilayer body 12, or may be disposed to be isolated. The same applies to the second surface 12b side.

Here, regarding the first base plating layer 32a of the multilayer ceramic capacitor 210 as well, similarly to the first base plating layer 32a of the multilayer ceramic capacitor 10, when a dimension in the lamination direction x of the first base plating layer 32a is denoted by t₁, and a dimension in the lamination direction x of the multilayer body 12 is denoted by t₂, the condition of t₂ - 5 µm ≤ t₁ ≤ t₂ + 2 µm is satisfied. Moreover, the first base plating layer 32a is preferably located at 5 µm or less from a point where the dimension in the lamination direction x of the multilayer body 12 is the highest.

Also, regarding the first base plating layer 32a of the multilayer ceramic capacitor 210, similarly to the first base plating layer 32a of the multilayer ceramic capacitor 10, when a first point where the first base plating layer 32a and the multilayer body 12 intersect is set as a reference point, an intersection of a line passing through a position 3 µm inward of the multilayer body 12 from the first point and parallel to the lamination direction x and the multilayer body 12 is set as a second point, and a point where a line passing through a position 1 µm outward of the multilayer body 12 from the first point and parallel to the lamination direction x and the first base plating layer 32a intersect is set as a third point, an angle θ formed by a first straight line x₁ connecting the first point and the second point and a second straight line x₂ connecting the first point and the third point is preferably 88° or more and 160° or less.

The structure of the first base plating layer 32a included in the first outer electrode 230a described above is also possessed by the second base plating layer 32b included in the second outer electrode 230b, the third base plating layer 32c included in the third outer electrode 230c, and the fourth base plating layer 32d constituting the fourth outer electrode 230d.

### (Thin Film Layer)

The thin film layer 34 is disposed so as to cover the base plating layer 32. The thin film layer 34 has a first thin film layer 34a, a second thin film layer 34b, a third thin film layer 34c, and a fourth thin film layer 34d.

The first thin film layer 34a covers a part of the first surface 12a and a part of the second surface 12b of the multilayer body 12 on the third surface 12c side and the fifth surface 12e side, and is disposed so as not to cover the third surface 12c and the fifth surface 12e of the multilayer body 12. The first thin film layer 34a may be disposed to be isolated from the first base plating layer 32a, or may be disposed to overlap the first base plating layer 32a. A surface of the first surface plating layer 36a described later may be shaped to have a recess.

The second thin film layer 34b covers a part of the first surface 12a and a part of the second surface 12b of the multilayer body 12 on the fourth surface 12d side and the sixth surface 12f side, and is disposed so as not to cover the fourth surface 12d and the sixth surface 12f of the multilayer body 12. The second thin film layer 34b may be disposed to be isolated from the second base plating layer 32b, or may be disposed to overlap the second base plating layer 32b. A surface of the second surface plating layer 36b described later may be shaped to have a recess.

The third thin film layer 34c covers a part of the first surface 12a and a part of the second surface 12b of the multilayer body 12 on the third surface 12c side and the sixth surface 12f side, and is disposed so as not to cover the third surface 12c and the sixth surface 12f of the multilayer body 12. The third thin film layer 34c may be disposed to be isolated from the third base plating layer 32c, or may be disposed to overlap the third base plating layer 32c. A surface of the third surface plating layer 36c described later may be shaped to have a recess.

The fourth thin film layer 34d covers a part of the first surface 12a and a part of the second surface 12b of the multilayer body 12 on the fourth surface 12d side and the fifth surface 12e side, and is disposed so as not to cover the fourth surface 12d and the fifth surface 12e of the multilayer body 12. The fourth thin film layer 34d may be disposed to be isolated from the fourth base plating layer 32d, or may be disposed to overlap the fourth base plating layer 32d. A surface of the fourth surface plating layer 36d described later may be shaped to have a recess.

Each of the first thin film layer 34a to the fourth thin film layer 34d is preferably one in which metal particles are deposited and which is formed by a sputtering method, an evaporation method, or the like. Thereby, a thickness of the first thin film layer 34a to the fourth thin film layer 34d in the direction connecting the first surface 12a and the second surface 12b of the multilayer body 12 can be 1 µm or less, and since the dimension of the multilayer ceramic capacitor 10 in the lamination direction x can be made sufficiently small, the height of the multilayer ceramic capacitor 10 can be reduced.

### (Surface Plating Layer)

The surface plating layer 36 includes a first surface plating layer 36a, a second surface plating layer 36b, a third surface plating layer 36c, and a fourth surface plating layer 36d.

The first surface plating layer 36a is disposed so as to cover the first thin film layer 34a and the first base plating layer 32a disposed on the third surface 12c of the multilayer body 12.

The second surface plating layer 36b is disposed so as to cover the second thin film layer 34b and the second base plating layer 32b disposed on the fourth surface 12d of the multilayer body 12.

The third surface plating layer 36c is disposed so as to cover the third thin film layer 34c and the third base plating layer 32c disposed on the third surface 12c of the multilayer body 12.

The fourth surface plating layer 36d is disposed so as to cover the fourth thin film layer 34d and the fourth base plating layer 32d disposed on the fourth surface 12d of the multilayer body 12.

It is preferable that the surface plating layer 36 contains at least one kind of metal selected from, for example, Cu, Ni, Sn, Pb, Au, Ag, Pd, Bi, or Zn, or an alloy containing the metal. It is preferable that the plating layer does not contain glass.

The surface plating layer 36 may be, for example, only Sn plating, or may have a two-layer structure of Ni plating and Sn plating, or a two-layer structure of Ni plating and Cu plating.

In the multilayer ceramic capacitor 210 according to the third embodiment shown in Fig. 19, the same effects as those of the above-described multilayer ceramic capacitor 10 are exhibited.

### 2. Manufacturing Method of Multilayer Ceramic Capacitor

Hereinafter, a manufacturing method of the multilayer ceramic capacitor according to the third embodiment will be described.

First, dielectric sheets and a conductive paste for inner electrodes are prepared. The dielectric sheets and the conductive paste for inner electrodes contain a binder and a solvent. Known binders and solvents can be used.

Next, on the dielectric sheet, the conductive paste for inner electrodes is printed in a predetermined pattern by, for example, inkjet printing, screen printing, or gravure printing. Thereby, a dielectric sheet on which a pattern of the first inner electrode is formed and a dielectric sheet on which a pattern of the second inner electrode is formed are prepared. Thereafter, by laminating the sheet on which the pattern of the first inner electrode is printed and the sheet on which the pattern of the second inner electrode is printed, a portion to become the inner layer portion 18 is formed.

Note that in printing of the pattern by each conductive paste, first, the pattern by the conductive paste for inner electrodes is printed.

Next, by laminating a predetermined number of dielectric sheets on which the pattern of the inner electrode is not printed, a portion to become the first outer layer portion 20a on the first surface 12a side is formed. Thereafter, the portion to become the inner layer portion 18 prepared above is laminated, and a predetermined number of dielectric sheets on which the pattern of the inner electrode is not printed are laminated on this portion to become the inner layer portion 18, whereby a portion to become the second outer layer portion 20b on the second surface 12b side is formed. Thus, a laminated sheet is produced.

Next, the laminated sheet is pressed in the lamination direction by means such as hydrostatic pressing to produce a laminated block.

Subsequently, the laminated block is cut into a predetermined size to cut out a laminated chip. At this time, corner portions and ridge line portions of the laminated chip may be rounded by barrel polishing or the like.

Next, the laminated chip is fired to produce the multilayer body 12. The firing temperature depends on materials of the ceramic and the inner electrode, but is preferably 900°C or higher and 1400°C or lower.

At this time, from the third surface 12c of the multilayer body 12, the first extended electrode portion 24a of the first inner electrode 16a and the third extended electrode portion 24c of the second inner electrode 16b are exposed. Moreover, from the fourth surface 12d of the multilayer body 12, the second extended electrode portion 24b of the first inner electrode 16a and the fourth extended electrode portion 24d of the second inner electrode 16b are exposed.

Subsequently, the outer electrodes 230 are formed on the multilayer body 12.

First, the base plating layer 32 is formed so as to cover the inner electrode 16 exposed on the surface of the multilayer body 12. The base plating layer 32 is assumed to be Cu plating, and is formed by electrolytic plating or electroless plating. At this time, heat treatment is performed on the multilayer body 12 after plating to drive off moisture residue left in the plating film or at the interface between the multilayer body 12 and the base plating layer 32. Furthermore, upon formation of the base plating layer 32, the angle θ is adjusted by adjusting the amount of rounding of the multilayer body 12 or adjusting the metal ion concentration in the base plating layer 32 so as to obtain the structure of the present invention.

Next, the multilayer bodies 12 on which the base plating layers 32 are formed are aligned on a workbench, and the thin film layer 34 is formed on the first surface 12a and on the second surface 12b by a sputtering method.

Thereafter, the surface plating layer 36 is formed on the thin film layer 34 and on the surface of the multilayer body 12. More specifically, a Ni plating layer and a Sn plating layer are formed as the surface plating layer 36 on the thin film layer 34. In performing plating treatment, either electrolytic plating or electroless plating may be adopted. However, electroless plating requires pretreatment with a catalyst or the like in order to improve a plating deposition rate, and has a demerit that the process becomes complicated. Therefore, normally, it is preferable to adopt electrolytic plating.

As described above, the multilayer ceramic capacitor 210 according to the third embodiment shown in Fig. 19 can be manufactured.

### D. Fourth Embodiment

### 1. Multilayer Ceramic Capacitor

An example of a multilayer ceramic capacitor 310 according to a fourth embodiment of the present invention will be described.

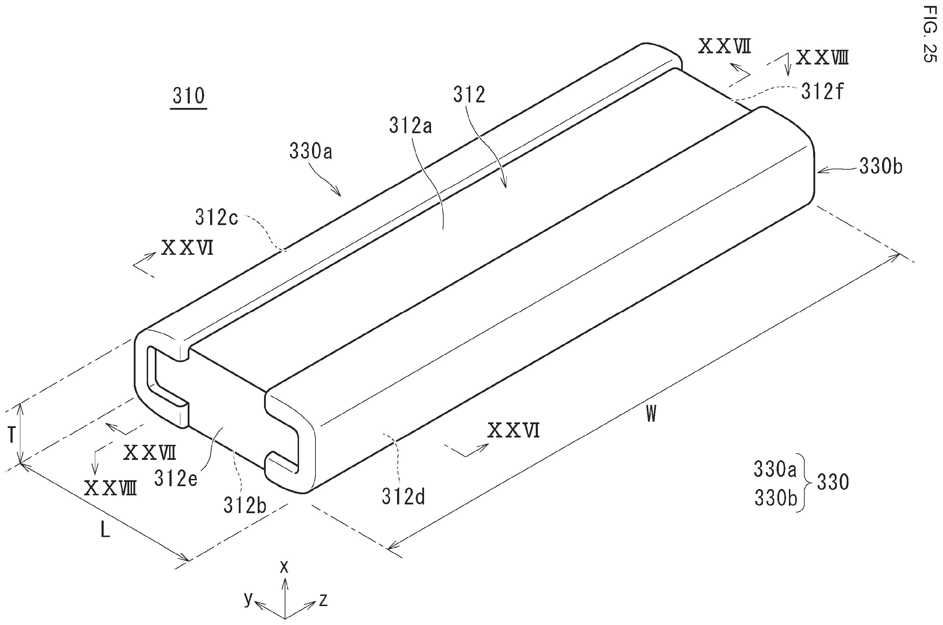

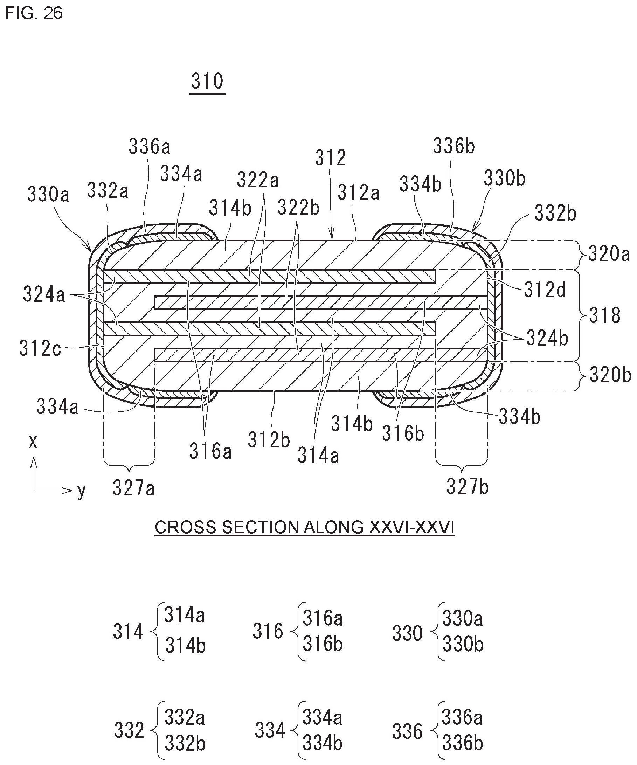

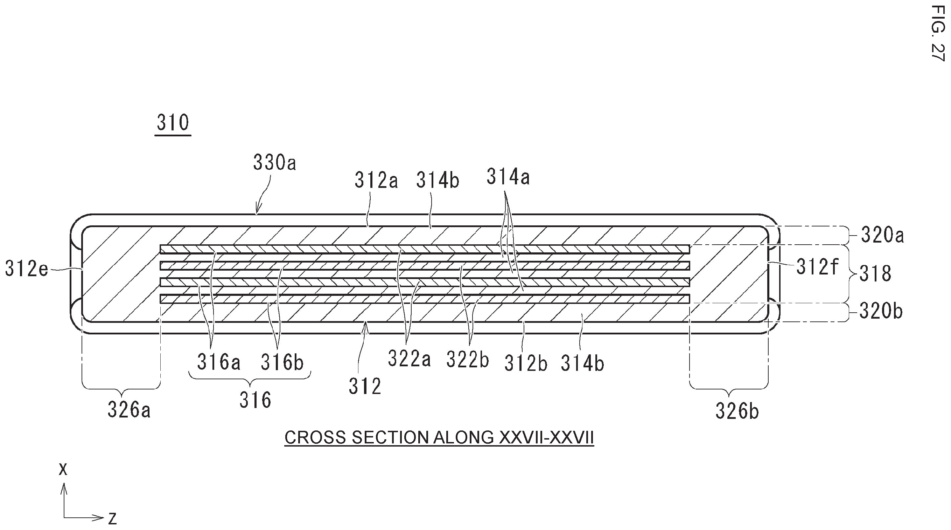

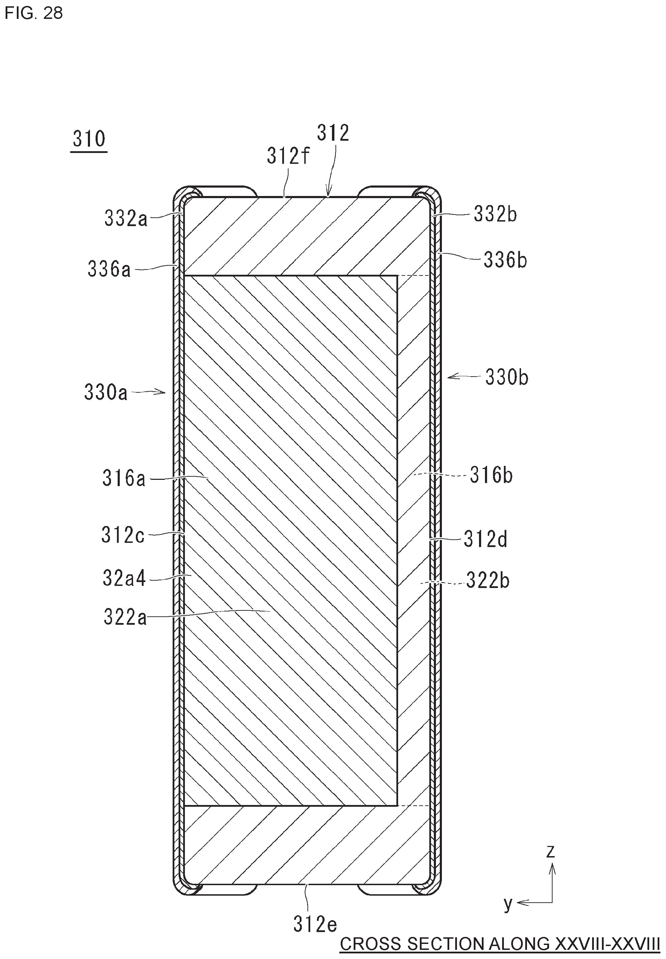

Fig. 25 is an external perspective view showing an example of a multilayer ceramic capacitor according to a fourth embodiment of the present invention. Fig. 26 is a schematic cross-sectional view along line XXVI-XXVI according to Fig. 25. Fig. 27 is a schematic cross-sectional view along line XXVII-XXVII according to Fig. 25. Fig. 28 is a schematic cross-sectional view along line XXVIII-XXVIII according to Fig. 19.

The multilayer ceramic capacitor 310 according to the fourth embodiment of the present invention includes a multilayer body 312 having the same configuration as the multilayer ceramic capacitor 10 of the first embodiment, and outer electrodes 330. In the multilayer ceramic capacitor 310, the W dimension is larger than the L dimension.

The multilayer ceramic capacitor 310 according to the fourth embodiment includes a rectangular parallelepiped multilayer body 312, and outer electrodes 330 disposed at both end portions of the multilayer body 312.

The multilayer body 112 has a plurality of laminated dielectric layers 314. Furthermore, the multilayer body 312 has a first surface 312a and a second surface 312b opposed in a lamination direction x, a third surface 312c and a fourth surface 312d opposed in a first direction y orthogonal to the lamination direction x, and a fifth surface 312e and a sixth surface 312f opposed in a second direction z orthogonal to the lamination direction x and the first direction y.

In the multilayer ceramic capacitor 310, the W dimension is larger than the L dimension.

The multilayer ceramic capacitor 310 includes the multilayer body 312 and the outer electrodes 330.

### (Multilayer Body)

The multilayer body 312 includes a plurality of dielectric layers 314 and a plurality of inner electrodes 316. The dielectric layers 314 include an inner layer dielectric layer 314a and an outer layer dielectric layer 314b. Moreover, the inner electrodes 316 include a first inner electrode 316a and a second inner electrode 316b.

Further, the multilayer body 312 has an inner layer portion 318, a first outer layer portion 320a located on the first surface 312a side, and a second outer layer portion 320b located on the second surface 312b side.

The first outer layer portion 320a is located on the first surface 312a side of the multilayer body 312, and is an aggregate of a plurality of outer layer dielectric layers 314b located between the first surface 312a and the inner electrode 316 closest to the first surface 312a.

The second outer layer portion 320b is located on the second surface 312b side of the multilayer body 12, and is an aggregate of a plurality of outer layer dielectric layers 314b located between the second surface 312b and the inner electrode 316 closest to the second surface 312b.

Then, a region sandwiched between the first outer layer portion 320a and the second outer layer portion 320b is the inner layer portion 318.

The inner layer portion 318 has the first inner electrode 316a having one end exposed to the third surface 312c and the fifth surface 312e and the other end exposed to the fourth surface 312d and the sixth surface 312f, the second inner electrode 316b having one end exposed to the third surface 312c and the sixth surface 312f and the other end exposed to the fourth surface 312d and the fifth surface 312e, and the inner layer dielectric layer 314a.

Since the material and the like of the dielectric layer 314 are the same as the dielectric layer 14, the description thereof is omitted.

### (Inner Electrode)

The inner electrode 316 has a plurality of first inner electrodes 316a and a plurality of second inner electrodes 316b. The first inner electrodes 316a and the second inner electrodes 316b are alternately laminated via the dielectric layers 314.

The first inner electrode 316a is disposed on a surface of the inner layer dielectric layer 314a. The first inner electrode 316a has a first opposed electrode portion 322a facing the first surface 312a and the second surface 312b and facing the second inner electrode 316b, and is laminated in the direction connecting the first surface 312a and the second surface 312b.

The first inner electrode 316a is extended to the third surface 312c of the multilayer body 312 by a first extended electrode portion 324a.

The second inner electrode 316b is disposed on a surface of an inner layer dielectric layer 314a different from the inner layer dielectric layer 314a on which the first inner electrode 316a is disposed. The second inner electrode 316b has a second opposed electrode portion 322b facing the first surface 312a and the second surface 312b and facing the first inner electrode 316a, and is laminated in the direction connecting the first surface 312a and the second surface 312b.

The second inner electrode 316b is extended to the fourth surface 312d by a second extended electrode portion 324b.

Also, as shown in Fig. 27, the multilayer body 312 includes a side portion (W gap) 326a of the multilayer body 312 located between one end in the second direction z of the second opposed electrode portion 322b of the second inner electrode 316b and the fifth surface 312e, and a side portion (W gap) 326b of the multilayer body 312 located between the other end in the first direction y of the first opposed electrode portion 322a of the first inner electrode 316a and the sixth surface 312f.

Furthermore, as shown in Fig. 26, the multilayer body 312 includes an end portion (L gap) 327a of the multilayer body 312 located between one end in the second direction z of the second opposed electrode portion 322b of the second inner electrode 316b and the fourth surface 312d, and a side portion (L gap) 327b of the multilayer body 312 located between the other end in the first direction y of the first opposed electrode portion 322a of the first inner electrode 316a and the third surface 312c.

### (Outer Electrode)

In the multilayer ceramic capacitor 310 according to the fourth embodiment, the outer electrode 330 is disposed so as to cover the first surface 312a and the second surface 312b of the multilayer body 312.

As shown in Figs. 25 to 28, the outer electrodes 330 are disposed on the multilayer body 312.

The outer electrodes 330 have a plurality of outer electrodes 330 connected to the first inner electrode 316a and the second inner electrode 316b. The outer electrodes 330 have a first outer electrode 330a and a second outer electrode 330b.

The first outer electrode 330a is disposed on the third surface 312c so as to cover the first extended electrode portion 324a of the first inner electrode 316a, and further, the first outer electrode 330a is disposed so as to cover a part of the first surface 312a and a part of the second surface 312b. The first outer electrode 330a is electrically connected to the first extended electrode portion 324a of the first inner electrode 316a.

The second outer electrode 330b is disposed on the fourth surface 312d so as to cover the second extended electrode portion 324b of the first inner electrode 316a, and further, the second outer electrode 330b is disposed so as to cover a part of the first surface 312a and a part of the second surface 312b. The second outer electrode 330b is electrically connected to the second extended electrode portion 124b of the first inner electrode 316a.

In the multilayer body 312, the first opposed electrode portion 322a of the first inner electrode 316a and the second opposed electrode portion 322b of the second inner electrode 316b are opposed via the inner layer dielectric layer 314a, whereby electric capacity is formed. Therefore, electric capacity can be obtained between the first outer electrode 330a to which the first inner electrode 316a is connected and the second outer electrode 330b, whereby characteristics of a capacitor are exhibited.

The first outer electrode 330a and the second outer electrode 330b each have a base plating layer 332, a thin film layer 334, and a surface plating layer 336.

In other words, the first outer electrode 330a has a first base plating layer 332a, a first thin film layer 334a, and a first surface plating layer 336a. The second outer electrode 330b has a second base plating layer 332b, a second thin film layer 334b, and a second surface plating layer 336b.

### (Base Plating Layer)

The base plating layer 332 is disposed on the third surface 312c and the fourth surface 312d. Hereinafter, a specific configuration of the base plating layer 332 will be described.

The first base plating layer 332a is disposed on a surface of the third surface 312c of the multilayer body 312 so as to cover the first extended electrode portion 324a of the first inner electrode 316a exposed from the third surface 312c of the multilayer body 312.

The second base plating layer 332b is disposed on a surface of the fourth surface 312d of the multilayer body 312 so as to cover the second extended electrode portion 324b of the first inner electrode 316a exposed from the fourth surface 312d of the multilayer body 312.

Note that the first base plating layer 332a of the first outer electrode 330a is preferably disposed on a ridge line portion formed by the first surface 312a and the third surface 312c of the multilayer body 312, and a ridge line portion formed by the second surface 312b and the third surface 312c. An upper end of the first base plating layer 332a of the first outer electrode 330a may be disposed so as to overlap with the lower side of the first thin film layer 334a on the ridge line portion formed by the first surface 312a and the third surface 312c of the multilayer body 312, or may be disposed to be isolated. The same applies to the second surface 312b side.

The second base plating layer 332b of the second outer electrode 330b is preferably disposed on a ridge line portion formed by the first surface 312a and the fourth surface 312d of the multilayer body 312, and a ridge line portion formed by the second surface 312b and the fourth surface 312d. An upper end of the second base plating layer 332b of the second outer electrode 330b may be disposed so as to overlap with the lower side of the second thin film layer 334b on the ridge line portion formed by the first surface 312a and the fourth surface 312d of the multilayer body 312, or may be disposed to be isolated. The same applies to the second surface 312b side.

Here, regarding the first base plating layer 332a of the multilayer ceramic capacitor 310 as well, similarly to the first base plating layer 32a of the multilayer ceramic capacitor 10, when a dimension in the lamination direction x of the first base plating layer 332a is denoted by t₁, and a dimension in the lamination direction x of the multilayer body 312 is denoted by t₂, the condition of t₂ - 5 µm ≤ t₁ ≤ t₂ + 2 µm is satisfied. Moreover, the first base plating layer 332a is preferably located at 5 µm or less from a point where the dimension in the lamination direction x of the multilayer body 312 is the highest.

Also, regarding the first base plating layer 132a of the multilayer ceramic capacitor 310, similarly to the first base plating layer 32a of the multilayer ceramic capacitor 10, when a first point where the first base plating layer 332a and the multilayer body 312 intersect is set as a reference point, an intersection of a line passing through a position 3 µm inward of the multilayer body 312 from the first point and parallel to the lamination direction x and the multilayer body 312 is set as a second point, and a point where a line passing through a position 1 µm outward of the multilayer body 312 from the first point and parallel to the lamination direction x and the first base plating layer 332a intersect is set as a third point, an angle θ formed by a first straight line x₁ connecting the first point and the second point and a second straight line x₂ connecting the first point and the third point is preferably 88° or more and 160° or less.

### (Thin Film Layer)

The thin film layer 334 covers the first surface 312a. Moreover, it is preferable that the thin film layer 334 covers the base plating layer 332. Thereby, intrusion of moisture entering from the base plating layer 332 can be suppressed. The thin film layer 334 has a first thin film layer 334a and a second thin film layer 334b.

The first thin film layer 334a covers a part of the first surface 312a and a part of the second surface 312b of the multilayer body 312 on the third surface 312c side, and is disposed so as not to cover the third surface 312c to the sixth surface 312f of the multilayer body 312. The first thin film layer 334a may be disposed to be isolated from the first base plating layer 332a, or may be disposed to overlap the first base plating layer 332a. A surface of the first surface plating layer 336a described later may be shaped to have a recess.

The second thin film layer 334b covers a part of the first surface 312a and a part of the second surface 312b of the multilayer body 312 on the fourth surface 312d side, and is disposed so as not to cover the third surface 312c to the sixth surface 312f of the multilayer body 312. The second thin film layer 334b may be disposed to be isolated from the second base plating layer 332b, or may be disposed to overlap the second base plating layer 332b. A surface of the second surface plating layer 336b described later may be shaped to have a recess.

Each of the first thin film layer 334a and the second thin film layer 334b is preferably one in which metal particles are deposited and which is formed by a sputtering method, an evaporation method, or the like. Thereby, a thickness of the first thin film layer 334a and the second thin film layer 334b in the direction connecting the first surface 312a and the second surface 312b of the multilayer body 312 can be 1 µm or less, and since the dimension of the multilayer ceramic capacitor 310 in the lamination direction x can be made sufficiently small, the height of the multilayer ceramic capacitor 310 can be reduced.

### (Surface Plating Layer)

The surface plating layer 336 includes a first surface plating layer 336a and a second surface plating layer 336b.

The first surface plating layer 336a is disposed so as to cover the first thin film layer 334a and the first base plating layer 332a disposed on the third surface 312c of the multilayer body 312.

The second surface plating layer 336b is disposed so as to cover the second thin film layer 334b and the second base plating layer 332b disposed on the fourth surface 312d of the multilayer body 312.

It is preferable that the surface plating layer 336 contains at least one kind of metal selected from, for example, Cu, Ni, Sn, Pb, Au, Ag, Pd, Bi, or Zn, or an alloy containing the metal. It is preferable that the plating layer does not contain glass.

The surface plating layer 336 may be, for example, only Sn plating, or may have a two-layer structure of Ni plating and Sn plating, or a two-layer structure of Ni plating and Cu plating.

In the multilayer ceramic capacitor 310 shown in Fig. 25, the same effects as those of the multilayer ceramic capacitor 10 according to the first embodiment are exhibited.

### 2. Manufacturing Method of Multilayer Ceramic Capacitor

Hereinafter, a manufacturing method of the multilayer ceramic capacitor which is an example of the multilayer ceramic capacitor according to the fourth embodiment will be described.

Hereinafter, a manufacturing method of the multilayer ceramic capacitor according to the first embodiment will be described.

First, dielectric sheets and a conductive paste for inner electrodes are prepared. The dielectric sheets and the conductive paste for inner electrodes contain a binder and a solvent. Known binders and solvents can be used.

Next, on the dielectric sheet, the conductive paste for inner electrodes is printed in a predetermined pattern by, for example, inkjet printing, screen printing, or gravure printing. Thereby, a dielectric sheet on which a pattern of the first inner electrode is formed and a dielectric sheet on which a pattern of the second inner electrode is formed are prepared. Thereafter, by laminating the sheet on which the pattern of the first inner electrode is printed and the sheet on which the pattern of the second inner electrode is printed, a portion to become the inner layer portion 18 is formed.

Also, for example, when forming a print pattern of the inner electrode by gravure printing, desired inner electrodes can be respectively formed by designing a gravure plate used in gravure printing as a graphic pattern of the first inner electrode, and changing it to this structure corresponding to a graphic pattern of the second inner electrode.

Furthermore, when forming a print pattern of the inner electrode layer by screen printing, desired inner electrodes can be formed by designing a mask of screen printing as a graphic pattern of the first inner electrode, and changing it to this structure corresponding to a graphic pattern of the second inner electrode.

Next, by laminating a predetermined number of dielectric sheets on which the pattern of the inner electrode is not printed, a portion to become the first outer layer portion 320a on the first surface 312a side is formed. Thereafter, the portion to become the inner layer portion 318 prepared above is laminated, and a predetermined number of dielectric sheets on which the pattern of the inner electrode is not printed are laminated on this portion to become the inner layer portion 318, whereby a portion to become the second outer layer portion 320b on the second surface 312b side is formed. Thus, a laminated sheet is produced.

Next, the laminated sheet is pressed in the lamination direction by means such as hydrostatic pressing to produce a laminated block.

Subsequently, the laminated block is cut into a predetermined size to cut out a laminated chip. At this time, corner portions and ridge line portions of the laminated chip may be rounded by barrel polishing or the like.

Next, the laminated chip is fired to produce the multilayer body 312. The firing temperature depends on materials of the ceramic and the inner electrode, but is preferably 900°C or higher and 1400°C or lower.

At this time, from the third surface 312c of the multilayer body 312, the first extended electrode portion 324a of the first inner electrode 316a is exposed. Moreover, from the fourth surface 312d of the multilayer body 312, the second extended electrode portion 324b of the second inner electrode 316b is exposed.

Subsequently, the outer electrodes 330 are formed on the multilayer body 312.

First, the base plating layer 332 is formed so as to cover the inner electrode 316 exposed on the surface of the multilayer body 312. The base plating layer 332 is assumed to be Cu plating, and is formed by electrolytic plating or electroless plating. At this time, heat treatment is performed on the multilayer body 312 after plating to drive off moisture residue left in the plating film or at the interface between the multilayer body 312 and the base plating layer 332. Furthermore, upon formation of the base plating layer 332, the angle θ is adjusted by adjusting the amount of rounding of the multilayer body 312 or adjusting the metal ion concentration in the base plating layer 332 so as to obtain the structure of the present invention.

Next, the multilayer bodies 312 on which the base plating layers 332 are formed are aligned on a workbench, and the thin film layer 334 is formed on the first surface 312a and on the second surface 312b by a sputtering method.

Thereafter, the surface plating layer 336 is formed on the thin film layer 334 and on the surface of the multilayer body 312. More specifically, a Ni plating layer and a Sn plating layer are formed as the surface plating layer 336 on the thin film layer 334. In performing plating treatment, either electrolytic plating or electroless plating may be adopted. However, electroless plating requires pretreatment with a catalyst or the like in order to improve a plating deposition rate, and has a demerit that the process becomes complicated. Therefore, normally, it is preferable to adopt electrolytic plating.

As described above, the multilayer ceramic capacitor 310 according to the embodiment shown in Fig. 25 can be manufactured.

### E. Experimental Examples

### 1. Experimental Example 1

Next, in order to confirm the effects of the multilayer ceramic capacitor according to the present invention described above, multilayer ceramic capacitors which were samples with varied differences between the dimension t₁ in the lamination direction of the base plating layer and the dimension t₂ in the lamination direction of the multilayer body were produced as samples for experiment according to the manufacturing method described above, a mounting resistance test was performed, and evaluation for each sample was performed.

### (1) Specifications of multilayer ceramic capacitors produced as samples of experimental examples

Using the manufacturing method according to the above embodiment, multilayer ceramic capacitors which were samples of Comparative Example 1 and Example 1 to Example 5 were produced.
- Structure of multilayer ceramic capacitor: Multilayer ceramic capacitor shown in Fig. 11A
- Dimension of multilayer ceramic capacitor (L): 480 µm
- Dimension of multilayer ceramic capacitor (W): 480 µm
- Dimension of multilayer ceramic capacitor (T): 60 µm
- Ceramic material: BaTiO₃
- Material of inner electrode: Ni
- Structure of outer electrode
   - Base plating layer: Cu plating
   - Thin film layer: Sputtered film containing at least one of Ni, Cr, and Cu
   - Surface plating layer: Two-layer structure of Ni plating layer and Sn plating layer

### (2) Method of collision resistance test

A chip was fixed to a metal plate with double-sided tape. Then, a 5 g Zr nozzle was prepared and allowed to free fall from a position about 2 mm higher than the chip surface. The Zr nozzle had an outer diameter φ of 0.6 mm and an inner diameter φ of 0.4 mm. A chip whose electric capacity decreased by 20% or more from the average value of electric capacity of 1000 chips in each sample before the test was determined as defective (NG). Then, the chips determined as NG were counted. The number of chips in each sample was 1000.

### (3) Results

The evaluation results are shown in Table 1.

Table 1 shows evaluation results for multilayer ceramic capacitors which were samples with varied differences between the dimension t₁ in the lamination direction of the base plating layer and the dimension t₂ in the lamination direction of the multilayer body. Note that a case where the dimension in the lamination direction of the base plating layer was larger than the dimension in the lamination direction of the multilayer body was indicated by a minus, and a case where the dimension in the lamination direction of the base plating layer was smaller than the dimension of the multilayer body was indicated by a plus.

**[Table 1]**

| | Comp. Ex. 1 | Ex. 1 | Ex. 2 | Ex. 3 | Ex. 4 | Ex. 5 |
|---|---|---|---|---|---|---|
| Difference between dimension t₁ in lamination direction of base plating layer and dimension t₂ in lamination direction of multilayer body (µm) | -6 | -2 | 0 | 1 | 3 | 5 |
| Evaluation by collision resistance test (count) | 24/1000 | 9/1000 | 6/1000 | 6/1000 | 2/1000 | 1/1000 |

According to Table 1, in Example 1 to Example 5, since the difference between the dimension t₁ in the lamination direction of the base plating layer and the dimension t₂ in the lamination direction of the multilayer body satisfies the condition of t₂ - 5 µm ≤ t₁ ≤ t₂ + 2 µm, good results were obtained, with 10 or fewer chips evaluated as defective (NG) out of 1000 chips in each sample as a result of the mounting resistance test.

On the other hand, in Comparative Example 1, since the difference between the dimension t₁ in the lamination direction of the base plating layer and the dimension t₂ in the lamination direction of the multilayer body does not satisfy the condition of t₂ - 5 µm ≤ t₁ ≤ t₂ + 2 µm, the result was that the number of defective (NG) chips increased to 24 out of 1000 chips in each sample as a result of the mounting resistance test.

### 2. Experimental Example 2

Moreover, in order to confirm the effects of the multilayer ceramic capacitor according to the present invention described above, multilayer ceramic capacitors which were samples with varied angles formed by the first straight line x₁ and the second straight line x₂ were produced as samples for experiment according to the manufacturing method described above, and evaluation of solder wetting up for each sample was performed.

### (1) Specifications of multilayer ceramic capacitors produced as samples of experimental examples

Using the manufacturing method according to the above embodiment, multilayer ceramic capacitors which were samples of Comparative Example 2 and Comparative Example 3 and Example 6 to Example 9 were produced.
- Structure of multilayer ceramic capacitor: Multilayer ceramic capacitor shown in Fig. 11A
- Dimension of multilayer ceramic capacitor (L): 480 µm
- Dimension of multilayer ceramic capacitor (W): 480 µm
- Dimension of multilayer ceramic capacitor (T): 60 µm
- Ceramic material: BaTiO₃
- Material of inner electrode: Ni
- Structure of outer electrode
   - Base plating layer: Cu plating
   - Thin film layer: Sputtered film containing at least one of Ni, Cr, and Cu
   - Surface plating layer: Two-layer structure of Ni plating layer and Sn plating layer

### (2) Method for evaluating solder wetting up

An evaluation substrate was prepared with a land pad 500 µm and an interval between land electrodes of 100 µm, and solder paste was applied on the evaluation substrate so as to be 300 µm and have a thickness of 40 µm. Note that a paste having a solder ball particle size of 5 µm or more and 15 µm or less was used for the solder paste. After mounting, heat treatment was performed at 230°C or higher for 30 minutes, and then, in a cross section when cross-section polishing was performed at positions of 1/2 W of the multilayer body and 1/2 of the outer electrode from a direction connecting the fifth surface and the sixth surface of the multilayer body, a distance from the outermost surface of the multilayer body to the outermost surface of the solder was measured with an optical microscope or the like, and if it exceeded 10 µm, it was evaluated as defective (NG).

### (3) Results

The evaluation results are shown in Table 2.

Table 2 shows evaluation results for multilayer ceramic capacitors which were samples with varied angles formed by the first straight line x₁ and the second straight line x₂.

**[Table 2]**

| | Ex. 6 | Ex. 7 | Ex. 8 | Ex. 9 | Comp. Ex. 2 | Comp. Ex. 3 |
|---|---|---|---|---|---|---|
| Angle formed by first straight line x₁ and second straight line x₂ (°) | 88 | 110 | 125 | 160 | 164 | 171 |
| Evaluation of solder wetting up | ○ | ○ | ○ | ○ | × | × |

According to Table 2, in Example 6 to Example 9, since the angle formed by the first straight line x₁ and the second straight line x₂ is 88° or more and 160° or less, it was confirmed that wetting up of solder to the second surface was suppressed.

On the other hand, in Comparative Example 2 and Comparative Example 3, since the angle formed by the first straight line x₁ and the second straight line x₂ is outside the range of 88° or more and 160° or less, it was confirmed that wetting up occurred by 10 µm or more from the outermost surface of the multilayer body.

Note that as described above, the embodiment of the present invention is disclosed in the above description, but the present invention is not limited to this.

That is, various changes can be made to the embodiment described above regarding mechanism, shape, material, quantity, position, arrangement, or the like without departing from the technical idea and scope of the object according to the present invention, and they are included in the present invention.

### Reference Signs List

10, 110, 210, 310 Multilayer ceramic capacitor
12 Multilayer body
12a, 112a, 312a First surface
12b, 112b, 312b Second surface
12c, 112c, 312c Third surface
12d, 112d, 312d Fourth surface
12e, 112e, 312e Fifth surface
12f, 112f, 312f Sixth surface
14, 114, 314 Dielectric layer
14a, 114a, 314a Inner layer dielectric layer
14b, 114b, 314b Outer layer dielectric layer
16, 116, 316 Inner electrode
16a, 116a, 316a First inner electrode
16b, 116b, 316b Second inner electrode
18, 118, 318 Inner layer portion
20a, 120a, 320a First outer layer portion
20b, 120b, 320b Second outer layer portion
22a, 122a, 322a First opposed electrode portion
22b, 122b, 322b Second opposed electrode portion
24a, 124a, 324a First extended electrode portion
24b, 124b, 324b Second extended electrode portion
24c, 124c Third extended electrode portion
24d, 124d Fourth extended electrode portion
26a, 26b, 126a, 126b, 326a, 326b Side portion (W gap) of multilayer body
27a, 27b, 127a, 127b, 327a, 327b End portion (L gap) of multilayer body
30, 130, 230, 330 Outer electrode
30a, 130a, 230a, 330a First outer electrode
30b, 130b, 230b, 330b Second outer electrode
30c, 130c, 230c Third outer electrode
30d, 130d, 230d Fourth outer electrode
34, 134, 334 Thin film layer
34a, 134a, 334a First thin film layer
34b, 134b, 334b Second thin film layer
34c, 134c Third thin film layer
34d, 134d Fourth thin film layer
36, 136, 336 Surface plating layer
36a, 136a, 336a First surface plating layer
36b, 136b, 336b Second surface plating layer
36c, 136c Third surface plating layer
36d, 136d Fourth surface plating layer
x Lamination direction
y First direction
z Second direction
L Dimension in first direction of multilayer ceramic capacitor
W Dimension in second direction of multilayer ceramic capacitor
T Dimension in lamination direction of multilayer ceramic capacitor

## Claims

1. A multilayer ceramic capacitor comprising:
a multilayer body having a first surface and a second surface opposed in a lamination direction, a third surface and a fourth surface opposed in a first direction orthogonal to the lamination direction, and a fifth surface and a sixth surface opposed in a second direction orthogonal to the lamination direction and the first direction; and
first to fourth outer electrodes disposed on a surface of the multilayer body, wherein
the multilayer body includes
a first inner electrode exposed to the third surface and the fourth surface, and
a second inner electrode exposed to the third surface and the fourth surface,
the first outer electrode has a first base plating layer connected to the first inner electrode, and
when a dimension in the lamination direction of the first base plating layer is denoted by t, a dimension in the lamination direction of the multilayer body is denoted by T, a dimension in the first direction of the multilayer ceramic capacitor is denoted by L, and a dimension in the second direction of the multilayer ceramic capacitor is denoted by W, $0.85 \leq L / W \leq 1.0$ is satisfied, and (T - 5 µm) ≤ t ≤ (T + 2 µm) is satisfied.

2. The multilayer ceramic capacitor according to claim 1, wherein (T - 5 µm) ≤ t ≤ T is satisfied.

3. The multilayer ceramic capacitor according to claim 1 or 2, wherein a dimension in the lamination direction of the multilayer ceramic capacitor is 220 µm or less.

4. The multilayer ceramic capacitor according to any one of claims 1 to 3, wherein
the first outer electrode has a first thin film layer, and
the first thin film layer is disposed on the first surface of the multilayer body and on the first base plating layer.

5. The multilayer ceramic capacitor according to claim 4, wherein
the first outer electrode has a region surrounded by the multilayer body, the first base plating layer, and the first thin film layer.

6. A multilayer ceramic capacitor comprising:
a multilayer body having a first surface and a second surface opposed in a lamination direction, a third surface and a fourth surface opposed in a first direction orthogonal to the lamination direction, and a fifth surface and a sixth surface opposed in a second direction orthogonal to the lamination direction and the first direction; and
a first outer electrode and a second outer electrode disposed on a surface of the multilayer body, wherein
the multilayer body includes
a first inner electrode exposed to the third surface and
a second inner electrode exposed to the fourth surface,
the first outer electrode has a first base plating layer connected to the first inner electrode, and
when a dimension in the lamination direction of the first base plating layer is denoted by t, a dimension in the lamination direction of the multilayer body is denoted by T, a dimension in the first direction of the multilayer ceramic capacitor is denoted by L, and a dimension in the second direction of the multilayer ceramic capacitor is denoted by W, $0.85 \leq L / W \leq 1.0$ is satisfied, and (T - 5 µm) ≤ t ≤ (T + 2 µm) is satisfied.
